# EUROPEAN PATENT SPECIFICATION

(11) **EP 4 566 216 B1**
(45) Date of publication and mention of the grant of the patent: **25.11.2026**
(21) Application number: 23733514.6
(22) Date of filing: 25.05.2023
(51) Int. Cl.: H04L 5/00, H04W 68/00

(54) **EARLY INDICATION OF A SOUNDING REFERENCE SIGNAL FOR POSITIONING FOR AN INACTIVE OR IDLE USER EQUIPMENT**
FRÜHE ANZEIGE EINES KLANGREFERENZSIGNALS ZUR POSITIONIERUNG FÜR EIN INAKTIVES ODER LEERLAUFENDES BENUTZERGERÄT
INDICATION PRÉCOCE D'UN SIGNAL DE RÉFÉRENCE DE SONDAGE POUR UN POSITIONNEMENT D'UN ÉQUIPEMENT UTILISATEUR INACTIF OU AU REPOS

(30) Priority: 03.08.2022 GR 20220100634
(43) Date of publication of application: 11.06.2025
(73) Proprietor: QUALCOMM INCORPORATED, San Diego, California 92121-1714 (US)
(72) Inventor: MANOLAKOS, Alexandros, San Diego, California 92121-1714 (US); LEI, Jing, San Diego, California 92121-1714 (US); XU, Huilin, San Diego, California 92121-1714 (US)
(74) Representative: Reddie & Grose LLP
(86) International application number: PCT/US2023/023477
(87) International publication number: WO 2024/030177

(56) References cited:
- WO-A1-2022/005254
- WO-A1-2022/081893
- WO-A1-2022/147380
- US-A1- 2021 194 734

## Description

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), enables higher data transfer speeds, greater numbers of connections, and better coverage, among other improvements. The 5G standard, according to the Next Generation Mobile Networks Alliance, is designed to provide higher data rates as compared to previous standards, more accurate positioning (e.g., based on reference signals for positioning (RS-P), such as downlink, uplink, or sidelink positioning reference signals (PRS)), and other technical enhancements. These enhancements, as well as the use of higher frequency bands, advances in PRS processes and technology, and high-density deployments for 5G, enable highly accurate 5G-based positioning.

US 2021/194734 A1 discloses control signaling mechanisms to support data transmission by a user equipment (UE) that is in the RRC_INACTIVE state and, more generally, in any inactive state. Beyond simply supporting data transmission by a user equipment that is in the RRC_INACTIVE state, aspects of the present application provide mechanisms for configuring the UE for preamble transmission or sounding reference signal (SRS) transmission and for toggling between such transmissions. Aspects of the present application relate to mechanisms for enabling Timing Advance estimation, which mechanisms are not burdened with high overhead and which allow the UE to remain in the RRC_INACTIVE state.

WO 2022/147380 A1 discloses techniques for wireless communication. In an aspect, a user equipment (UE) monitors one or more physical downlink control channel (PDCCH) candidates in a search space while in a radio resource control (RRC) inactive state, receives, while in the RRC inactive state, a positioning paging message from a network entity on at least one PDCCH candidate of the one or more PDCCH candidates, the positioning paging message configured to trigger an update to one or more parameters associated with an ongoing positioning session involving the UE, applies, while in the RRC inactive state, the update to the one or more parameters, and transmits, while in the RRC inactive state, an acknowledgment to the network entity in response to reception of the positioning paging message.

WO 2022/081893 A1 discloses methods, apparatus, and systems for determining and transmitting positioning information in a wireless communication network are provided. For example, a method for wireless communications comprises receiving configuration information related to a set of positioning configurations and a small data transmission (SDT), determining, based on the configuration information, that at least one positioning configuration of the set of positioning configurations satisfies a positioning requirement and is associated with a payload size being less than a data volume threshold (DVT) associated with the SDT, selecting, from the at least one positioning configuration, a positioning configuration associated with a payload size being closest to the DVT, performing a positioning measurement based on the selected positioning configuration, and sending, using an uplink resource for the SDT, a measurement report based on the selected positioning configuration and the positioning measurement.

WO 2022/005254 A1 discloses a next generation wireless communication system for supporting a higher data transmission rate or the like than a 4th generation (4G) wireless communication system. According to various embodiments, a method for transmitting and receiving a signal in a wireless communication system and an apparatus supporting same may be provided, and various other embodiments may be provided.

### SUMMARY

The invention is defined by the appended claims.

Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A, 2B, and 2C illustrate example wireless network structures, according to aspects of the disclosure.
FIGS. 3A, 3B, and 3C are simplified block diagrams of several sample aspects of components that may be employed in a user equipment (UE), a base station, and a network entity, respectively, and configured to support communications as taught herein.
FIG. 4 is a diagram illustrating example interaction between an application, an application service, an operating system (OS), and hardware using various application programming interfaces (APIs), according to aspects of the disclosure.
FIG. 5 is a diagram illustrating an example frame structure, according to aspects of the disclosure.
FIG. 6 is a diagram illustrating various downlink channels within an example downlink slot, according to aspects of the disclosure.
FIG. 7 is a diagram illustrating various uplink channels within an example uplink slot, according to aspects of the disclosure.
FIG. 8 illustrates examples of various positioning methods supported in New Radio (NR), according to aspects of the disclosure.
FIG. 9 illustrates a periodic and triggered 5GC-mobile terminated (MT)-location request (LR) procedure with small data transmission (SDT) UL and DL positioning, in accordance with aspects of the disclosure.
FIG. 10 illustrates a downlink (DL)-only positioning procedure, in accordance with aspects of the disclosure.
FIG. 11 illustrates an uplink (UL)-only positioning procedure, in accordance with aspects of the disclosure.
FIG. 12 illustrates a DL+UL positioning procedure, in accordance with aspects of the disclosure.
FIG. 13 illustrates a paging physical downlink control channel (PDCCH) configuration in accordance with aspects of the disclosure.
FIG. 14 illustrates a tracking reference signal (TRS) validity period configuration in accordance with aspects of the disclosure.
FIG. 15 illustrates an exemplary process of communications according to an aspect of the disclosure.
FIG. 16 illustrates an exemplary process of communications according to an aspect of the disclosure.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular radio access technology (RAT), unless otherwise noted. In general, a UE may be any wireless communication device (e.g., a mobile phone, router, tablet computer, laptop computer, consumer asset locating device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as an "access terminal" or "AT," a "client device," a "wireless device," a "subscriber device," a "subscriber terminal," a "subscriber station," a "user terminal" or "UT," a "mobile device," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on the Institute of Electrical and Electronics Engineers (IEEE) 802.11 specification, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs, including supporting data, voice, and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an uplink / reverse or downlink / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

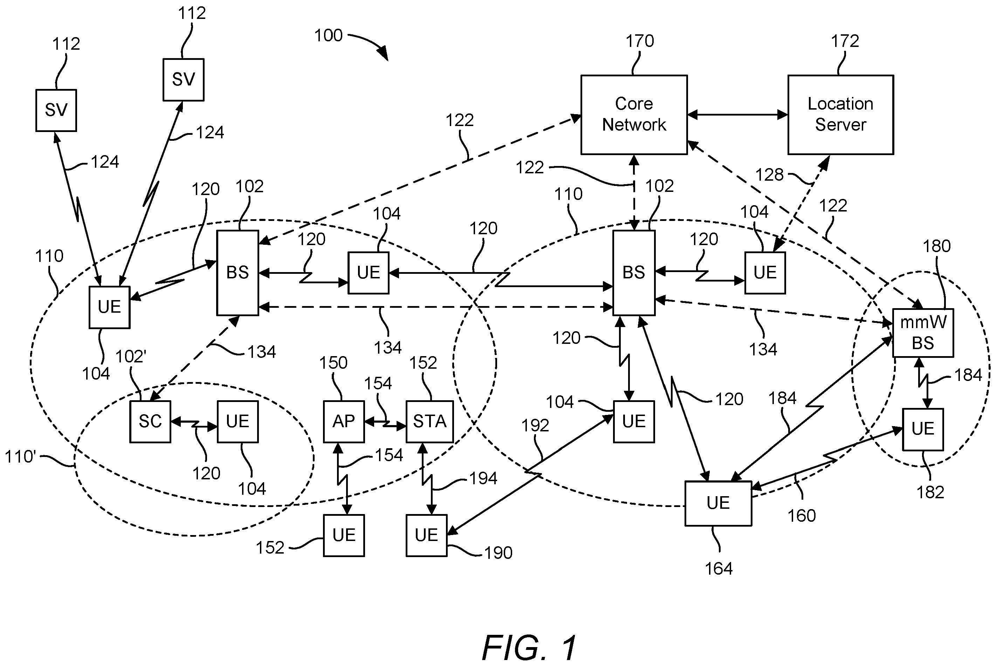

FIG. 1 illustrates an example wireless communications system 100, according to aspects of the disclosure. The wireless communications system 100 (which may also be referred to as a wireless wide area network (WWAN)) may include various base stations 102 (labeled "BS") and various UEs 104. The base stations 102 may include macro cell base stations (high power cellular base stations) and/or small cell base stations (low power cellular base stations). In an aspect, the macro cell base stations may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or a 5G core (5GC)) through backhaul links 122, and through the core network 170 to one or more location servers 172 (e.g., a location management function (LMF) or a secure user plane location (SUPL) location platform (SLP)). The location server(s) 172 may be part of core network 170 or may be external to core network 170. A location server 172 may be integrated with a base station 102. A UE 104 may communicate with a location server 172 directly or indirectly. For example, a UE 104 may communicate with a location server 172 via the base station 102 that is currently serving that UE 104. A UE 104 may also communicate with a location server 172 through another path, such as via an application server (not shown), via another network, such as via a wireless local area network (WLAN) access point (AP) (e.g., AP 150 described below), and so on. For signaling purposes, communication between a UE 104 and a location server 172 may be represented as an indirect connection (e.g., through the core network 170, etc.) or a direct connection (e.g., as shown via direct connection 128), with the intervening nodes (if any) omitted from a signaling diagram for clarity.

In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), an enhanced cell identifier (ECI), a virtual cell identifier (VCI), a cell global identifier (CGI), etc.) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In addition, because a TRP is typically the physical transmission point of a cell, the terms "cell" and "TRP" may be used interchangeably. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' (labeled "SC" for "small cell") may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having the same parameters, regardless of whether or not the transmitting antennas of the network node themselves are physically co-located. In NR, there are four types of quasi-co-location (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Transmit and receive beams may be spatially related. A spatial relation means that parameters for a second beam (e.g., a transmit or receive beam) for a second reference signal can be derived from information about a first beam (e.g., a receive beam or a transmit beam) for a first reference signal. For example, a UE may use a particular receive beam to receive a reference downlink reference signal (e.g., synchronization signal block (SSB)) from a base station. The UE can then form a transmit beam for sending an uplink reference signal (e.g., sounding reference signal (SRS)) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

In some cases, the UE 164 and the UE 182 may be capable of sidelink communication. Sidelink-capable UEs (SL-UEs) may communicate with base stations 102 over communication links 120 using the Uu interface (i.e., the air interface between a UE and a base station). SL-UEs (e.g., UE 164, UE 182) may also communicate directly with each other over a wireless sidelink 160 using the PC5 interface (i.e., the air interface between sidelink-capable UEs). A wireless sidelink (or just "sidelink") is an adaptation of the core cellular (e.g., LTE, NR) standard that allows direct communication between two or more UEs without the communication needing to go through a base station. Sidelink communication may be unicast or multicast, and may be used for device-to-device (D2D) media-sharing, vehicle-to-vehicle (V2V) communication, vehicle-to-everything (V2X) communication (e.g., cellular V2X (cV2X) communication, enhanced V2X (eV2X) communication, etc.), emergency rescue applications, etc. One or more of a group of SL-UEs utilizing sidelink communications may be within the geographic coverage area 110 of a base station 102. Other SL-UEs in such a group may be outside the geographic coverage area 110 of a base station 102 or be otherwise unable to receive transmissions from a base station 102. In some cases, groups of SL-UEs communicating via sidelink communications may utilize a one-to-many (1:M) system in which each SL-UE transmits to every other SL-UE in the group. In some cases, a base station 102 facilitates the scheduling of resources for sidelink communications. In other cases, sidelink communications are carried out between SL-UEs without the involvement of a base station 102.

In an aspect, the sidelink 160 may operate over a wireless communication medium of interest, which may be shared with other wireless communications between other vehicles and/or infrastructure access points, as well as other RATs. A "medium" may be composed of one or more time, frequency, and/or space communication resources (e.g., encompassing one or more channels across one or more carriers) associated with wireless communication between one or more transmitter / receiver pairs. In an aspect, the medium of interest may correspond to at least a portion of an unlicensed frequency band shared among various RATs. Although different licensed frequency bands have been reserved for certain communication systems (e.g., by a government entity such as the Federal Communications Commission (FCC) in the United States), these systems, in particular those employing small cell access points, have recently extended operation into unlicensed frequency bands such as the Unlicensed National Information Infrastructure (U-NII) band used by wireless local area network (WLAN) technologies, most notably IEEE 802.11x WLAN technologies generally referred to as "Wi-Fi." Example systems of this type include different variants of CDMA systems, TDMA systems, FDMA systems, orthogonal FDMA (OFDMA) systems, single-carrier FDMA (SC-FDMA) systems, and so on.

Note that although FIG. 1 only illustrates two of the UEs as SL-UEs (i.e., UEs 164 and 182), any of the illustrated UEs may be SL-UEs. Further, although only UE 182 was described as being capable of beamforming, any of the illustrated UEs, including UE 164, may be capable of beamforming. Where SL-UEs are capable of beamforming, they may beamform towards each other (i.e., towards other SL-UEs), towards other UEs (e.g., UEs 104), towards base stations (e.g., base stations 102, 180, small cell 102', access point 150), etc. Thus, in some cases, UEs 164 and 182 may utilize beamforming over sidelink 160.

In the example of FIG. 1, any of the illustrated UEs (shown in FIG. 1 as a single UE 104 for simplicity) may receive signals 124 from one or more Earth orbiting space vehicles (SVs) 112 (e.g., satellites). In an aspect, the SVs 112 may be part of a satellite positioning system that a UE 104 can use as an independent source of location information. A satellite positioning system typically includes a system of transmitters (e.g., SVs 112) positioned to enable receivers (e.g., UEs 104) to determine their location on or above the Earth based, at least in part, on positioning signals (e.g., signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104. A UE 104 may include one or more dedicated receivers specifically designed to receive signals 124 for deriving geo location information from the SVs 112.

In a satellite positioning system, the use of signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multifunctional Satellite Augmentation System (MSAS), the Global Positioning System (GPS) Aided Geo Augmented Navigation or GPS and Geo Augmented Navigation system (GAGAN), and/or the like. Thus, as used herein, a satellite positioning system may include any combination of one or more global and/or regional navigation satellites associated with such one or more satellite positioning systems.

In an aspect, SVs 112 may additionally or alternatively be part of one or more non-terrestrial networks (NTNs). In an NTN, an SV 112 is connected to an earth station (also referred to as a ground station, NTN gateway, or gateway), which in turn is connected to an element in a 5G network, such as a modified base station 102 (without a terrestrial antenna) or a network node in a 5GC. This element would in turn provide access to other elements in the 5G network and ultimately to entities external to the 5G network, such as Internet web servers and other user devices. In that way, a UE 104 may receive communication signals (e.g., signals 124) from an SV 112 instead of, or in addition to, communication signals from a terrestrial base station 102.

The wireless communications system 100 may further include one or more UEs, such as UE 190, that connects indirectly to one or more communication networks via one or more device-to-device (D2D) peer-to-peer (P2P) links (referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on.

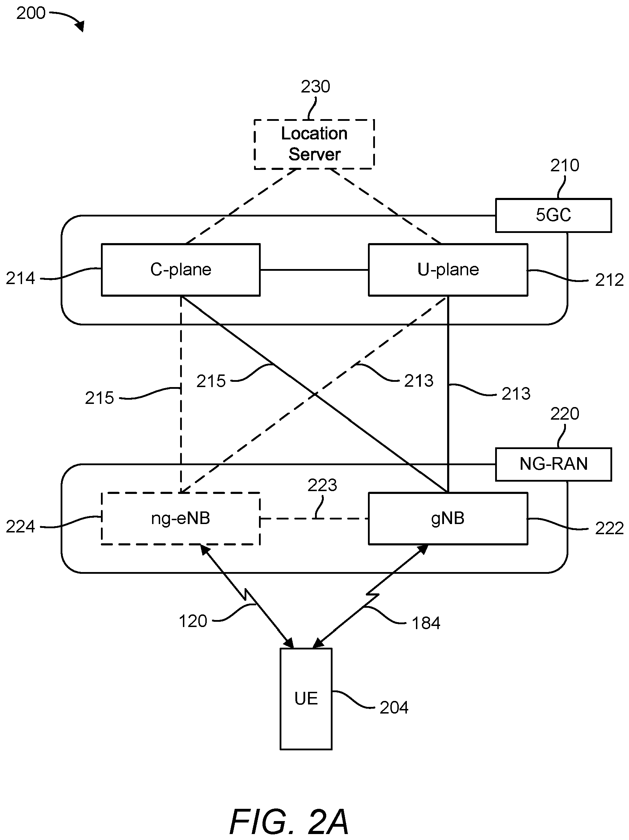

FIG. 2A illustrates an example wireless network structure 200. For example, a 5GC 210 (also referred to as a Next Generation Core (NGC)) can be viewed functionally as control plane (C-plane) functions 214 (e.g., UE registration, authentication, network access, gateway selection, etc.) and user plane (U-plane) functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the user plane functions 212 and control plane functions 214, respectively. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, a Next Generation RAN (NG-RAN) 220 may have one or more gNBs 222, while other configurations include one or more of both ng-eNBs 224 and gNBs 222. Either (or both) gNB 222 or ng-eNB 224 may communicate with one or more UEs 204 (e.g., any of the UEs described herein).

Another optional aspect may include a location server 230, which may be in communication with the 5GC 210 to provide location assistance for UE(s) 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network (e.g., a third party server, such as an original equipment manufacturer (OEM) server or service server).

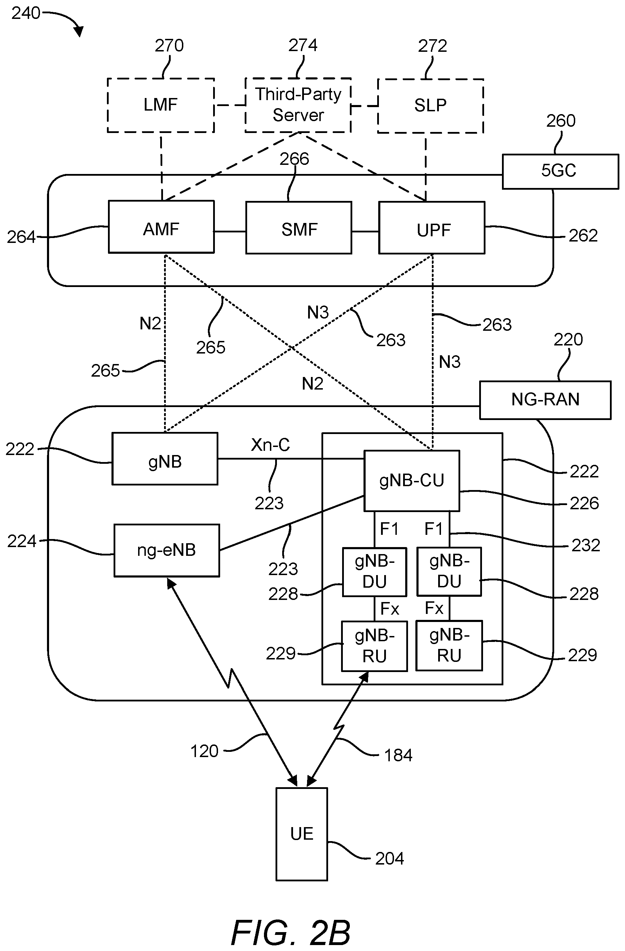

FIG. 2B illustrates another example wireless network structure 240. A 5GC 260 (which may correspond to 5GC 210 in FIG. 2A) can be viewed functionally as control plane functions, provided by an access and mobility management function (AMF) 264, and user plane functions, provided by a user plane function (UPF) 262, which operate cooperatively to form the core network (i.e., 5GC 260). The functions of the AMF 264 include registration management, connection management, reachability management, mobility management, lawful interception, transport for session management (SM) messages between one or more UEs 204 (e.g., any of the UEs described herein) and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the NG-RAN 220 and the LMF 270, evolved packet system (EPS) bearer identifier allocation for interworking with the EPS, and UE 204 mobility event notification. In addition, the AMF 264 also supports functionalities for non-3GPP (Third Generation Partnership Project) access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as an SLP 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, NG-RAN 220, and UEs 204 over a control plane (e.g., using interfaces and protocols intended to convey signaling messages and not voice or data), the SLP 272 may communicate with UEs 204 and external clients (e.g., third-party server 274) over a user plane (e.g., using protocols intended to carry voice and/or data like the transmission control protocol (TCP) and/or IP).

Yet another optional aspect may include a third-party server 274, which may be in communication with the LMF 270, the SLP 272, the 5GC 260 (e.g., via the AMF 264 and/or the UPF 262), the NG-RAN 220, and/or the UE 204 to obtain location information (e.g., a location estimate) for the UE 204. As such, in some cases, the third-party server 274 may be referred to as a location services (LCS) client or an external client. The third-party server 274 can be implemented as a plurality of separate servers (e.g., physically separate servers, different software modules on a single server, different software modules spread across multiple physical servers, etc.), or alternately may each correspond to a single server.

User plane interface 263 and control plane interface 265 connect the 5GC 260, and specifically the UPF 262 and AMF 264, respectively, to one or more gNBs 222 and/or ng-eNBs 224 in the NG-RAN 220. The interface between gNB(s) 222 and/or ng-eNB(s) 224 and the AMF 264 is referred to as the "N2" interface, and the interface between gNB(s) 222 and/or ng-eNB(s) 224 and the UPF 262 is referred to as the "N3" interface. The gNB(s) 222 and/or ng-eNB(s) 224 of the NG-RAN 220 may communicate directly with each other via backhaul connections 223, referred to as the "Xn-C" interface. One or more of gNBs 222 and/or ng-eNBs 224 may communicate with one or more UEs 204 over a wireless interface, referred to as the "Uu" interface.

The functionality of a gNB 222 may be divided between a gNB central unit (gNB-CU) 226, one or more gNB distributed units (gNB-DUs) 228, and one or more gNB radio units (gNB-RUs) 229. A gNB-CU 226 is a logical node that includes the base station functions of transferring user data, mobility control, radio access network sharing, positioning, session management, and the like, except for those functions allocated exclusively to the gNB-DU(s) 228. More specifically, the gNB-CU 226 generally host the radio resource control (RRC), service data adaptation protocol (SDAP), and packet data convergence protocol (PDCP) protocols of the gNB 222. A gNB-DU 228 is a logical node that generally hosts the radio link control (RLC) and medium access control (MAC) layer of the gNB 222. Its operation is controlled by the gNB-CU 226. One gNB-DU 228 can support one or more cells, and one cell is supported by only one gNB-DU 228. The interface 232 between the gNB-CU 226 and the one or more gNB-DUs 228 is referred to as the "F1" interface. The physical (PHY) layer functionality of a gNB 222 is generally hosted by one or more standalone gNB-RUs 229 that perform functions such as power amplification and signal transmission/reception. The interface between a gNB-DU 228 and a gNB-RU 229 is referred to as the "Fx" interface. Thus, a UE 204 communicates with the gNB-CU 226 via the RRC, SDAP, and PDCP layers, with a gNB-DU 228 via the RLC and MAC layers, and with a gNB-RU 229 via the PHY layer.

Deployment of communication systems, such as 5G NR systems, may be arranged in multiple manners with various components or constituent parts. In a 5G NR system, or network, a network node, a network entity, a mobility element of a network, a RAN node, a core network node, a network element, or a network equipment, such as a base station, or one or more units (or one or more components) performing base station functionality, may be implemented in an aggregated or disaggregated architecture. For example, a base station (such as a Node B (NB), evolved NB (eNB), NR base station, 5G NB, access point (AP), a transmit receive point (TRP), or a cell, etc.) may be implemented as an aggregated base station (also known as a standalone base station or a monolithic base station) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more central or centralized units (CUs), one or more distributed units (DUs), or one or more radio units (RUs)). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU also can be implemented as virtual units, i.e., a virtual central unit (VCU), a virtual distributed unit (VDU), or a virtual radio unit (VRU).

Base station-type operation or network design may consider aggregation characteristics of base station functionality. For example, disaggregated base stations may be utilized in an integrated access backhaul (IAB) network, an open radio access network (O-RAN (such as the network configuration sponsored by the O-RAN Alliance)), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

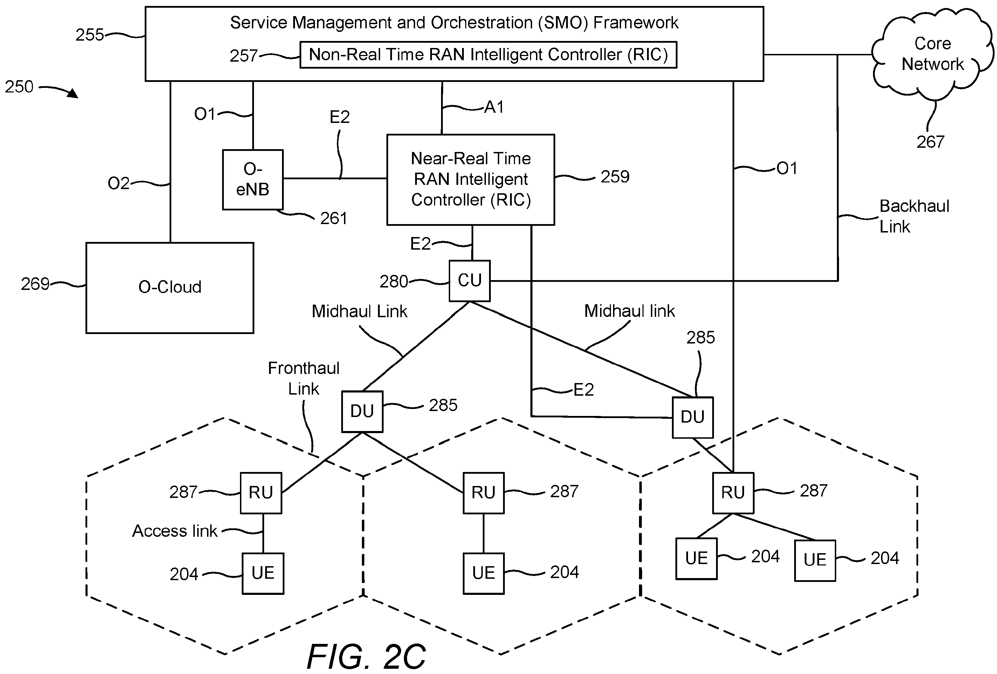

FIG. 2C illustrates an example disaggregated base station architecture 250, according to aspects of the disclosure. The disaggregated base station architecture 250 may include one or more central units (CUs) 280 (e.g., gNB-CU 226) that can communicate directly with a core network 267 (e.g., 5GC 210, 5GC 260) via a backhaul link, or indirectly with the core network 267 through one or more disaggregated base station units (such as a Near-Real Time (Near-RT) RAN Intelligent Controller (RIC) 259 via an E2 link, or a Non-Real Time (Non-RT) RIC 257 associated with a Service Management and Orchestration (SMO) Framework 255, or both). A CU 280 may communicate with one or more distributed units (DUs) 285 (e.g., gNB-DUs 228) via respective midhaul links, such as an F1 interface. The DUs 285 may communicate with one or more radio units (RUs) 287 (e.g., gNB-RUs 229) via respective fronthaul links. The RUs 287 may communicate with respective UEs 204 via one or more radio frequency (RF) access links. In some implementations, the UE 204 may be simultaneously served by multiple RUs 287.

Each of the units, i.e., the CUs 280, the DUs 285, the RUs 287, as well as the Near-RT RICs 259, the Non-RT RICs 257 and the SMO Framework 255, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as a radio frequency (RF) transceiver), configured to receive or transmit signals, or both, over a wireless transmission medium to one or more of the other units.

In some aspects, the CU 280 may host one or more higher layer control functions. Such control functions can include radio resource control (RRC), packet data convergence protocol (PDCP), service data adaptation protocol (SDAP), or the like. Each control function can be implemented with an interface configured to communicate signals with other control functions hosted by the CU 280. The CU 280 may be configured to handle user plane functionality (i.e., Central Unit - User Plane (CU-UP)), control plane functionality (i.e., Central Unit - Control Plane (CU-CP)), or a combination thereof. In some implementations, the CU 280 can be logically split into one or more CU-UP units and one or more CU-CP units. The CU-UP unit can communicate bidirectionally with the CU-CP unit via an interface, such as the E1 interface when implemented in an O-RAN configuration. The CU 280 can be implemented to communicate with the DU 285, as necessary, for network control and signaling.

The DU 285 may correspond to a logical unit that includes one or more base station functions to control the operation of one or more RUs 287. In some aspects, the DU 285 may host one or more of a radio link control (RLC) layer, a medium access control (MAC) layer, and one or more high physical (PHY) layers (such as modules for forward error correction (FEC) encoding and decoding, scrambling, modulation and demodulation, or the like) depending, at least in part, on a functional split, such as those defined by the 3rd Generation Partnership Project (3GPP). In some aspects, the DU 285 may further host one or more low PHY layers. Each layer (or module) can be implemented with an interface configured to communicate signals with other layers (and modules) hosted by the DU 285, or with the control functions hosted by the CU 280.

Lower-layer functionality can be implemented by one or more RUs 287. In some deployments, an RU 287, controlled by a DU 285, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 287 can be implemented to handle over the air (OTA) communication with one or more UEs 204. In some implementations, real-time and non-real-time aspects of control and user plane communication with the RU(s) 287 can be controlled by the corresponding DU 285. In some scenarios, this configuration can enable the DU(s) 285 and the CU 280 to be implemented in a cloud-based RAN architecture, such as a vRAN architecture.

The SMO Framework 255 may be configured to support RAN deployment and provisioning of non-virtualized and virtualized network elements. For non-virtualized network elements, the SMO Framework 255 may be configured to support the deployment of dedicated physical resources for RAN coverage requirements which may be managed via an operations and maintenance interface (such as an O1 interface). For virtualized network elements, the SMO Framework 255 may be configured to interact with a cloud computing platform (such as an open cloud (O-Cloud) 269) to perform network element life cycle management (such as to instantiate virtualized network elements) via a cloud computing platform interface (such as an O2 interface). Such virtualized network elements can include, but are not limited to, CUs 280, DUs 285, RUs 287 and Near-RT RICs 259. In some implementations, the SMO Framework 255 can communicate with a hardware aspect of a 4G RAN, such as an open eNB (O-eNB) 261, via an O1 interface. Additionally, in some implementations, the SMO Framework 255 can communicate directly with one or more RUs 287 via an O1 interface. The SMO Framework 255 also may include a Non-RT RIC 257 configured to support functionality of the SMO Framework 255.

The Non-RT RIC 257 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 259. The Non-RT RIC 257 may be coupled to or communicate with (such as via an A1 interface) the Near-RT RIC 259. The Near-RT RIC 259 may be configured to include a logical function that enables near-real-time control and optimization of RAN elements and resources via data collection and actions over an interface (such as via an E2 interface) connecting one or more CUs 280, one or more DUs 285, or both, as well as an O-eNB, with the Near-RT RIC 259.

In some implementations, to generate AI/ML models to be deployed in the Near-RT RIC 259, the Non-RT RIC 257 may receive parameters or external enrichment information from external servers. Such information may be utilized by the Near-RT RIC 259 and may be received at the SMO Framework 255 or the Non-RT RIC 257 from non-network data sources or from network functions. In some examples, the Non-RT RIC 257 or the Near-RT RIC 259 may be configured to tune RAN behavior or performance. For example, the Non-RT RIC 257 may monitor long-term trends and patterns for performance and employ AI/MI, models to perform corrective actions through the SMO Framework 255 (such as reconfiguration via O1) or via creation of RAN management policies (such as A1 policies).

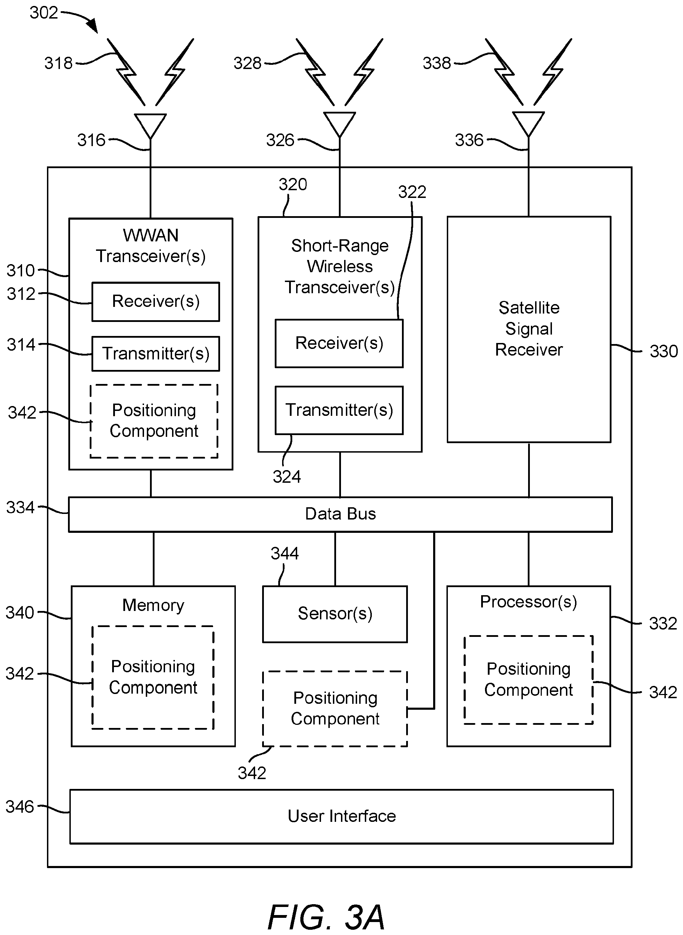

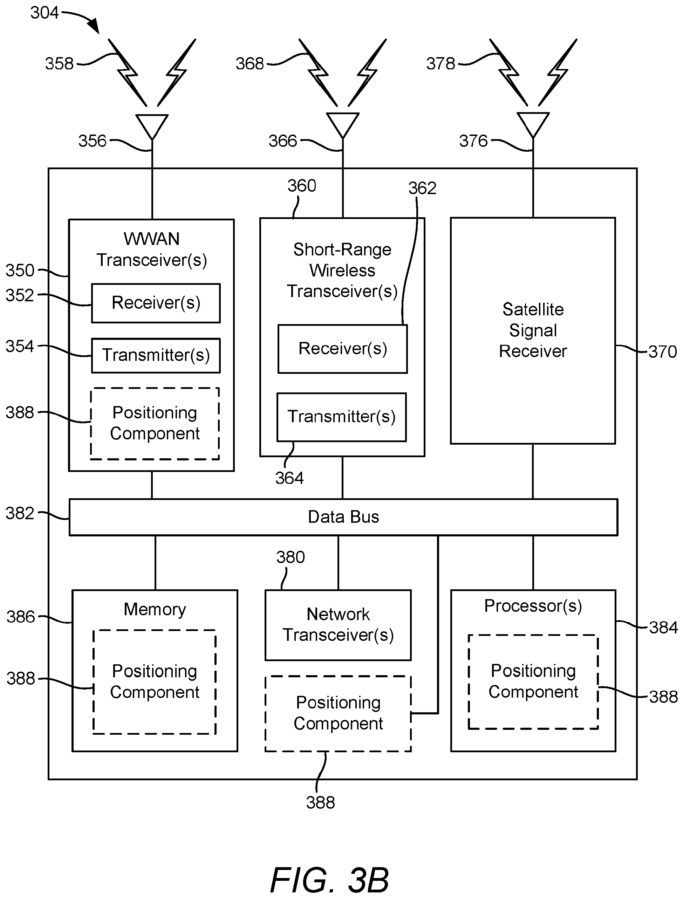

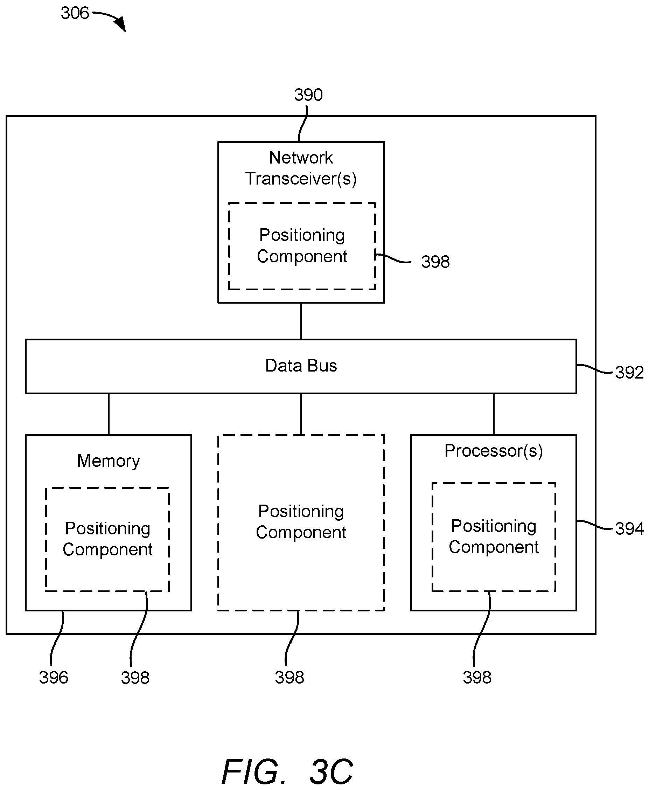

FIGS. 3A, 3B, and 3C illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270, or alternatively may be independent from the NG-RAN 220 and/or 5GC 210/260 infrastructure depicted in FIGS. 2A and 2B, such as a private network) to support the operations described herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include one or more wireless wide area network (WWAN) transceivers 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may each be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 each also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., WiFi, LTE-D, Bluetooth^{®}, Zigbee^{®}, Z-Wave^{®}, PC5, dedicated short-range communications (DSRC), wireless access for vehicular environments (WAVE), near-field communication (NFC), ultra-wideband (UWB), etc.) over a wireless communication medium of interest. The short-range wireless transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be WiFi transceivers, Bluetooth^{®} transceivers, Zigbee^{®} and/or Z-Wave^{®} transceivers, NFC transceivers, UWB transceivers, or vehicle-to-vehicle (V2V) and/or vehicle-to-everything (V2X) transceivers.

The UE 302 and the base station 304 also include, at least in some cases, satellite signal receivers 330 and 370. The satellite signal receivers 330 and 370 may be connected to one or more antennas 336 and 376, respectively, and may provide means for receiving and/or measuring satellite positioning/communication signals 338 and 378, respectively. Where the satellite signal receivers 330 and 370 are satellite positioning system receivers, the satellite positioning/communication signals 338 and 378 may be global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. Where the satellite signal receivers 330 and 370 are non-terrestrial network (NTN) receivers, the satellite positioning/communication signals 338 and 378 may be communication signals (e.g., carrying control and/or user data) originating from a 5G network. The satellite signal receivers 330 and 370 may comprise any suitable hardware and/or software for receiving and processing satellite positioning/communication signals 338 and 378, respectively. The satellite signal receivers 330 and 370 may request information and operations as appropriate from the other systems, and, at least in some cases, perform calculations to determine locations of the UE 302 and the base station 304, respectively, using measurements obtained by any suitable satellite positioning system algorithm.

The base station 304 and the network entity 306 each include one or more network transceivers 380 and 390, respectively, providing means for communicating (e.g., means for transmitting, means for receiving, etc.) with other network entities (e.g., other base stations 304, other network entities 306). For example, the base station 304 may employ the one or more network transceivers 380 to communicate with other base stations 304 or network entities 306 over one or more wired or wireless backhaul links. As another example, the network entity 306 may employ the one or more network transceivers 390 to communicate with one or more base station 304 over one or more wired or wireless backhaul links, or with other network entities 306 over one or more wired or wireless core network interfaces.

A transceiver may be configured to communicate over a wired or wireless link. A transceiver (whether a wired transceiver or a wireless transceiver) includes transmitter circuitry (e.g., transmitters 314, 324, 354, 364) and receiver circuitry (e.g., receivers 312, 322, 352, 362). A transceiver may be an integrated device (e.g., embodying transmitter circuitry and receiver circuitry in a single device) in some implementations, may comprise separate transmitter circuitry and separate receiver circuitry in some implementations, or may be embodied in other ways in other implementations. The transmitter circuitry and receiver circuitry of a wired transceiver (e.g., network transceivers 380 and 390 in some implementations) may be coupled to one or more wired network interface ports. Wireless transmitter circuitry (e.g., transmitters 314, 324, 354, 364) may include or be coupled to a plurality of antennas (e.g., antennas 316, 326, 356, 366), such as an antenna array, that permits the respective apparatus (e.g., UE 302, base station 304) to perform transmit "beamforming," as described herein. Similarly, wireless receiver circuitry (e.g., receivers 312, 322, 352, 362) may include or be coupled to a plurality of antennas (e.g., antennas 316, 326, 356, 366), such as an antenna array, that permits the respective apparatus (e.g., UE 302, base station 304) to perform receive beamforming, as described herein. In an aspect, the transmitter circuitry and receiver circuitry may share the same plurality of antennas (e.g., antennas 316, 326, 356, 366), such that the respective apparatus can only receive or transmit at a given time, not both at the same time. A wireless transceiver (e.g., WWAN transceivers 310 and 350, short-range wireless transceivers 320 and 360) may also include a network listen module (NLM) or the like for performing various measurements.

As used herein, the various wireless transceivers (e.g., transceivers 310, 320, 350, and 360, and network transceivers 380 and 390 in some implementations) and wired transceivers (e.g., network transceivers 380 and 390 in some implementations) may generally be characterized as "a transceiver," "at least one transceiver," or "one or more transceivers." As such, whether a particular transceiver is a wired or wireless transceiver may be inferred from the type of communication performed. For example, backhaul communication between network devices or servers will generally relate to signaling via a wired transceiver, whereas wireless communication between a UE (e.g., UE 302) and a base station (e.g., base station 304) will generally relate to signaling via a wireless transceiver.

The UE 302, the base station 304, and the network entity 306 also include other components that may be used in conjunction with the operations as disclosed herein. The UE 302, the base station 304, and the network entity 306 include one or more processors 332, 384, and 394, respectively, for providing functionality relating to, for example, wireless communication, and for providing other processing functionality. The processors 332, 384, and 394 may therefore provide means for processing, such as means for determining, means for calculating, means for receiving, means for transmitting, means for indicating, etc. In an aspect, the processors 332, 384, and 394 may include, for example, one or more general purpose processors, multi-core processors, central processing units (CPUs), ASICs, digital signal processors (DSPs), field programmable gate arrays (FPGAs), other programmable logic devices or processing circuitry, or various combinations thereof.

The UE 302, the base station 304, and the network entity 306 include memory circuitry implementing memories 340, 386, and 396 (e.g., each including a memory device), respectively, for maintaining information (e.g., information indicative of reserved resources, thresholds, parameters, and so on). The memories 340, 386, and 396 may therefore provide means for storing, means for retrieving, means for maintaining, etc. In some cases, the UE 302, the base station 304, and the network entity 306 may include positioning component 342, 388, and 398, respectively. The positioning component 342, 388, and 398 may be hardware circuits that are part of or coupled to the processors 332, 384, and 394, respectively, that, when executed, cause the UE 302, the base station 304, and the network entity 306 to perform the functionality described herein. In other aspects, the positioning component 342, 388, and 398 may be external to the processors 332, 384, and 394 (e.g., part of a modem processing system, integrated with another processing system, etc.). Alternatively, the positioning component 342, 388, and 398 may be memory modules stored in the memories 340, 386, and 396, respectively, that, when executed by the processors 332, 384, and 394 (or a modem processing system, another processing system, etc.), cause the UE 302, the base station 304, and the network entity 306 to perform the functionality described herein. FIG. 3A illustrates possible locations of the positioning component 342, which may be, for example, part of the one or more WWAN transceivers 310, the memory 340, the one or more processors 332, or any combination thereof, or may be a standalone component. FIG. 3B illustrates possible locations of the positioning component 388, which may be, for example, part of the one or more WWAN transceivers 350, the memory 386, the one or more processors 384, or any combination thereof, or may be a standalone component. FIG. 3C illustrates possible locations of the positioning component 398, which may be, for example, part of the one or more network transceivers 390, the memory 396, the one or more processors 394, or any combination thereof, or may be a standalone component.

The UE 302 may include one or more sensors 344 coupled to the one or more processors 332 to provide means for sensing or detecting movement and/or orientation information that is independent of motion data derived from signals received by the one or more WWAN transceivers 310, the one or more short-range wireless transceivers 320, and/or the satellite signal receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in two-dimensional (2D) and/or three-dimensional (3D) coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the one or more processors 384 in more detail, in the downlink, IP packets from the network entity 306 may be provided to the processor 384. The one or more processors 384 may implement functionality for an RRC layer, a packet data convergence protocol (PDCP) layer, a radio link control (RLC) layer, and a medium access control (MAC) layer. The one or more processors 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the one or more processors 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the one or more processors 332, which implements Layer-3 (L3) and Layer-2 (L2) functionality.

In the downlink, the one or more processors 332 provides demultiplexing between transport and logical channels, packet reassembly, deciphering, header decompression, and control signal processing to recover IP packets from the core network. The one or more processors 332 are also responsible for error detection.

Similar to the functionality described in connection with the downlink transmission by the base station 304, the one or more processors 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the one or more processors 384.

In the uplink, the one or more processors 384 provides demultiplexing between transport and logical channels, packet reassembly, deciphering, header decompression, control signal processing to recover IP packets from the UE 302. IP packets from the one or more processors 384 may be provided to the core network. The one or more processors 384 are also responsible for error detection.

For convenience, the UE 302, the base station 304, and/or the network entity 306 are shown in FIGS. 3A, 3B, and 3C as including various components that may be configured according to the various examples described herein. It will be appreciated, however, that the illustrated components may have different functionality in different designs. In particular, various components in FIGS. 3A to 3C are optional in alternative configurations and the various aspects include configurations that may vary due to design choice, costs, use of the device, or other considerations. For example, in case of FIG. 3A, a particular implementation of UE 302 may omit the WWAN transceiver(s) 310 (e.g., a wearable device or tablet computer or PC or laptop may have Wi-Fi and/or Bluetooth capability without cellular capability), or may omit the short-range wireless transceiver(s) 320 (e.g., cellular-only, etc.), or may omit the satellite signal receiver 330, or may omit the sensor(s) 344, and so on. In another example, in case of FIG. 3B, a particular implementation of the base station 304 may omit the WWAN transceiver(s) 350 (e.g., a Wi-Fi "hotspot" access point without cellular capability), or may omit the short-range wireless transceiver(s) 360 (e.g., cellular-only, etc.), or may omit the satellite signal receiver 370, and so on. For brevity, illustration of the various alternative configurations is not provided herein, but would be readily understandable to one skilled in the art.

The various components of the UE 302, the base station 304, and the network entity 306 may be communicatively coupled to each other over data buses 334, 382, and 392, respectively. In an aspect, the data buses 334, 382, and 392 may form, or be part of, a communication interface of the UE 302, the base station 304, and the network entity 306, respectively. For example, where different logical entities are embodied in the same device (e.g., gNB and location server functionality incorporated into the same base station 304), the data buses 334, 382, and 392 may provide communication between them.

The components of FIGS. 3A, 3B, and 3C may be implemented in various ways. In some implementations, the components of FIGS. 3A, 3B, and 3C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processors 332, 384, 394, the transceivers 310, 320, 350, and 360, the memories 340, 386, and 396, the positioning component 342, 388, and 398, etc.

In some designs, the network entity 306 may be implemented as a core network component. In other designs, the network entity 306 may be distinct from a network operator or operation of the cellular network infrastructure (e.g., NG RAN 220 and/or 5GC 210/260). For example, the network entity 306 may be a component of a private network that may be configured to communicate with the UE 302 via the base station 304 or independently from the base station 304 (e.g., over a non-cellular communication link, such as WiFi).

Application services are a pool of services, such as load balancing, application performance monitoring, application acceleration, autoscaling, micro segmentation, service proxy, service discovery, etc., needed to optimally deploy, run, and improve applications. Services and applications are both software programs, but they generally have differing traits. Broadly, services often target smaller and more isolated functions than applications, and applications often expose and call services, including services in other applications.

Web services are a type of application service that can be accessed via a web address for direct application-to-application interaction. Web services can be local, distributed, or web-based. Web services are built on top of open standards, such as TCP/IP, HTTP, Java, HTML, and XML, and therefore, web services are not tied to any one operating system or programming language. As such, software applications written in various programming languages and running on various platforms can use web services to exchange data over computer networks like the Internet in a manner similar to interprocess communication on a single computer. For example, a client can invoke a web service by sending an XML message to the web service and waiting for a corresponding XML response.

An application programming interface (API) is an interface that facilitates interaction between different systems (e.g., hardware, firmware, and/or software entities or levels). More specifically, an API is a defined set of rules, commands, permissions, and/or protocols that allow one system to interact with, and access data from, another system. For example, an API may provide an interface for a higher level of software (e.g., an application, a web service, an application service, etc.) to access a lower level of software (e.g., a microservice, the operating system, BIOS, firmware, device drivers, etc.) or a hardware component (e.g., a USB controller, a memory controller, a transceiver, etc.). Since a web service exposes an application's data and functionality, every web service is effectively an API, but not every API is a web service.

One type of API for building microservices applications is the representational state transfer API, also known as the "REST API" or the "RESTful API." The REST API is a set of web API architecture principles, meaning that to be a REST API, the interface must adhere to certain architectural constraints. The REST API typically uses HTTP commands and secure sockets layer (SSL) encryption. It is language agnostic insofar as it can be used to connect applications and microservices written in different programming languages. The commands common to the REST API include HTTP PUT, HTTP POST, HTTP DELETE, HTTP GET, and HTTP PATCH. Developers can use these REST API commands to perform actions on different "resources" within an application or service, such as data in a database. REST APIs can use uniform resource locators (URLs) to locate and indicate the resource on which to perform an action.

Microservices are individual small, autonomous, independent services and/or functions that together form a larger microservices-based application. Within the application, each microservice performs one defined function, such as authenticating users or retrieving a particular type of data. The goal of the microservices, which are typically language-independent, is to enable them to fit into any type of application and communicate or cooperate with each other to achieve the overall purpose of the larger microservices-based application. When connecting microservices to create a microservices-based application, APIs define the rules that prevent and permit the actions of and interactions between individual microservices. For example, REST APIs may be used as the rules, commands, permissions, and/or protocols that integrate the individual microservices to function as a single application.

Webhooks enable the interaction between web-based applications using custom callbacks. The use of webhooks allows web-based applications to automatically communicate with other web-based applications. Unlike traditional systems where one system (the "subject" system) continuously polls another system (the "observer" system) for certain data, webhooks allow the observer system to push the data to the subject system automatically whenever the event occurs. This reduces a significant load on the two systems, as calls are made between the two systems only when a designated event occurs.

Webhooks communicate via HTTP and rely on the presence of static URLs that point to APIs in the subject system that should be notified when an event occurs on the observer system. Thus, the subject system needs to designate one or more URLs that will accept event notifications from the observer system.

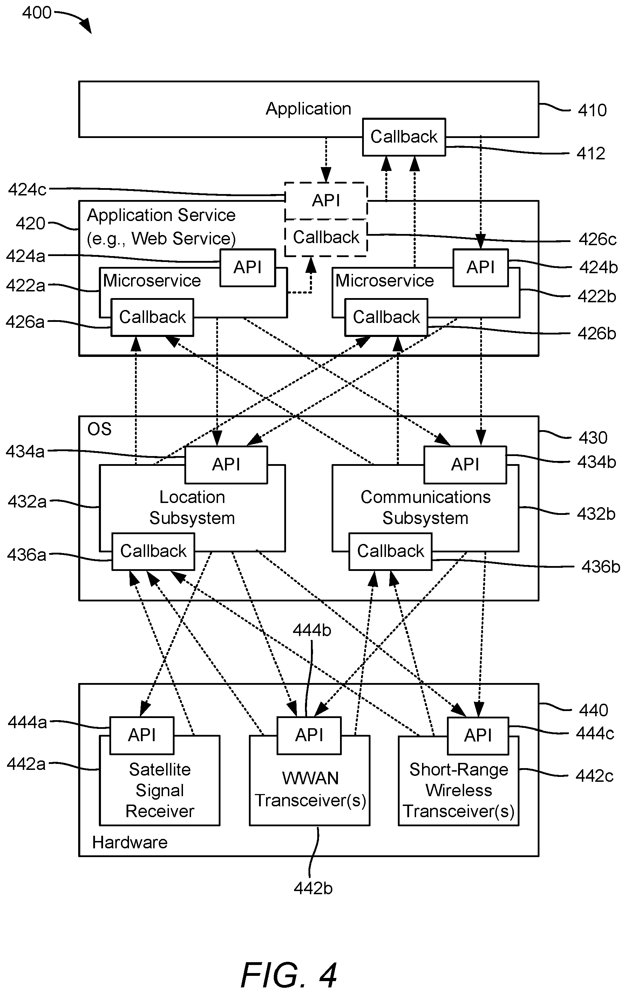

FIG. 4 is a diagram 400 illustrating example interaction between an application 410, an application service 420, an operating system (OS) 430, and hardware 440 using various APIs, according to aspects of the disclosure. In an aspect, the application 410, application service 420, operating system 430, and hardware 440 may be incorporated in the same device (e.g., a UE, a base station, etc.).

As shown in FIG. 4, the application service 420 (which may be a web service) comprises two microservices 422a and 422b (collectively microservices 422). As will be appreciated, however, the application service 420 may comprise more or fewer than two microservices 422. In some cases, the application 410 may access the individual microservices 422 directly via their respective APIs 424a and 424b (collectively APIs 424). This is illustrated in FIG. 4 by application 410 invoking microservice 422b via API 424b. Alternatively, the application 410 may invoke the application service 420 via an API 424c for the application service 420. The application service 420 can then invoke the appropriate microservice(s) 422 via the respective APIs 424. This is illustrated in FIG. 4 by the application service 410 invoking microservice 422a via API 424a on behalf of the application 410.

If invoked by the application 410, the microservices 422 can respond to the application 410 via the application's 410 callback 412. Alternatively, if invoked by the application service 420, the microservice 422 can respond to the application service 420 via the application service's 420 callback 426c. In either case, the client (either the application 410 or the application service 420) may invoke the microservice(s) 422 by sending, for example, an XML message to the microservice 422 via the respective API 424, and the microservice 422 may respond to the client by sending a corresponding XML response to the callback 412.

The microservices 422 may access various subsystems within the operating system 430 via the subsystems' respective APIs. In the example of FIG. 4, the operating system 430 includes a location subsystem 432a and a communications subsystem 432b (collectively subsystems 432). The location subsystem 432a may comprise software and/or firmware for determining the location of a mobile device (e.g., a UE). The mobile device being located may be the device that includes the operating system 430 (e.g., a UE calculating its own location, as in the case of UE-based positioning) or another device that does not include the operating system 430 (e.g., where a location server estimates a UE's location). The communications subsystem 432b may similarly comprise software and/or firmware for enabling wireless communications by the device including the operating system 430. For example, the communications subsystem 432b may implement lower layer communication functionality (e.g., MAC layer functionality, RRC layer functionality, etc.).

The subsystems 432 each expose respective APIs 434a and 434b (collectively APIs 434) to the higher architecture levels. The microservices 422 may invoke the subsystems 432 via their respective APIs 434, and the subsystems 432 may respond to the microservices 422 via the microservices' 422 callbacks 426a and 426b (collectively callbacks 426). In the example of FIG. 4, the microservice 422a invokes the location subsystem 432a and the microservice 422b invokes the communications subsystem 432b within the operating system 430. As such, microservice 422a may be a location-related microservice and microservice 422b may be a communications-related microservice. However, as will be appreciated, either microservice 422 may invoke either subsystem 432 via its respective API 434.

In the example of FIG. 4, the hardware 440 includes a satellite signal receiver 442a, one or more WWAN transceivers 442b, and one or more short-range wireless transceivers 442c (collectively hardware components 442). The satellite signal receiver 442a may correspond to, for example, satellite signal receiver 330 or 370 in FIGS. 3A and 3B. The one or more WWAN transceivers 442b may correspond to, for example, the one or more WWAN transceivers 310 or 350 in FIGS. 3A and 3B. The one or more short-range wireless transceivers 442c may correspond to, for example, the one or more short-range wireless transceivers 320 or 360 in FIGS. 3A and 3B.

In the example of FIG. 4, the location subsystem 432a may send commands (e.g., requests for measurements of reference signals, requests to transmit reference signals, etc.) to the satellite signal receiver 442a, the one or more WWAN transceivers 442b, and/or the one or more short-range wireless transceivers 442c via their APIs 444a, 444b, and 444c, respectively. The satellite signal receiver 442a, the one or more WWAN transceivers 442b, and/or the one or more short-range wireless transceivers 442c may send responses (e.g., measurements of reference signals, acknowledgments, etc.) to the commands to the location subsystem 432a via callback 436a. Similarly, the communications subsystem 432b may send information to be transmitted wirelessly (e.g., user data, measurement reports, etc.) to the one or more WWAN transceivers 442b and/or the one or more short-range wireless transceivers 442c via their APIs 444b and 444c, respectively. The one or more WWAN transceivers 442b and/or the one or more short-range wireless transceivers 442c may send information received wirelessly (e.g., user data, location requests, positioning assistance data, etc.) to the communications subsystem 432b via callback 436b.

As a specific positioning example in the context of FIG. 4, the device incorporating the illustrated architecture may be a mobile device, and the application 410 may be an application that uses the location of the mobile device (e.g., a UE), such as a navigation application (e.g., running locally on the mobile device). The application 410 therefore invokes application service 420 (via API 424c), which invokes microservice 422a (via API 424a), or invokes microservice 422a directly (via API 424a). The command from the application 410 indicates that the application 420 is requesting the location of the mobile device, and may include (or additional commands may include) other information related to the requested location fix, such as the requested quality of service (QoS) (e.g., accuracy and latency).

Based on the QoS of the location request, the known capabilities of the mobile device (e.g., available positioning technologies, such as satellite-based, NR-based, Wi-Fi-based, etc.), the available reference signal configurations (e.g., from nearby base stations), and the like, the microservice 422a calls the location subsystem 432a (via API 434a). Note that the microservice 422a may coordinate with other microservices, other application services, other applications, and the like to obtain the information necessary to locate the mobile device. For example, the microservice 422a may need to access another microservice associated with one or more base stations the mobile device is expected to measure in order to perform an NR-based positioning procedure.

The microservice 422a may select the positioning technology to use to obtain the location of the mobile device based on the known capabilities of the mobile device and the requested QoS. For example, using the satellite signal receiver 442a may provide high accuracy and low latency but it may be turned off. As another example, using the one or more WWAN transceivers 442b may provide low latency, but if the mobile device is indoors, the accuracy may be poor. Based on the selected positioning technology, the microservice 422a sends one or more commands to the location subsystem 432a requesting the location subsystem 432a to invoke the satellite signal receiver 442a, the one or more WWAN transceivers 442b, or the one or more short-range wireless transceivers 442c. Also depending on the type of positioning technology selected, the microservice 422a may provide commands regarding which reference signals to measure, which reference signals to transmit, and the like. In addition, the microservice 422a may indicate the accuracy and latency needed for the positioning measurements.

Based on the commands from the microservice 422a, the location subsystem 432a invokes the appropriate hardware component(s) (via one or more of APIs 444). For example, if the positioning technology is NR-based, the location subsystem 432a may transmit commands to the one or more WWAN transceivers 442b to measure and/or transmit certain reference signals at certain times and on certain frequencies. In addition, based on the requested accuracy and latency, the location subsystem 432a may increase or decrease the amount of power and/or processing resources allocated to the one or more WWAN transceivers 442b. For example, for a higher accuracy requirement, the location subsystem 432a may dedicate more power and/or processing resources to the one or more WWAN transceivers 442b.

The location subsystem 432a receives (via callback 436a) positioning measurements (e.g., reception times, transmission times, signal strengths, etc.) from the one or more WWAN transceivers 442b and passes them to the microservice 422a (via callback 426a). The microservice 422a can then calculate the location of the mobile device based on the measurements and any other available information (e.g., the location(s) of the base station(s) transmitting the measured reference signals). The microservice 422a provides the calculated location of the mobile device to the application 410 via callback 412 or via application service 420 (depending on which entity invoked the microservice 422a).

In certain aspects, the application 410 may provide credentials or other authorization to the microservice 422a indicating that the application 410 is permitted to access the location of the mobile device. Alternatively, upon receiving the request from the application 410, the microservice 422a may determine whether the application 410 is authorized. This check may be performed via another microservice, for example, or by invoking the operating system 430 to determine whether the application 410 has permission to access the mobile device's location. Similarly, the microservice 422a may need to provide credentials or other authorization to the operating system 430 to indicate that the microservice 422a is permitted to access the location of the mobile device. Alternatively, upon receiving the request from the microservice 422a, the operating system 430 may determine whether the microservice 422a is authorized.

In certain aspects, the application 410 may use a webhook to obtain the location of the mobile device. In that way, the application 410 will be informed whenever the mobile device moves from one location to another. In this case, the observer system would be the microservice 422a and the subject system would be the application 410. Instead of the application 410 having to periodically call the microsystem 422a to check whether the mobile device's location has changed, a webhook created in the application 410 would allow the microservice 422a to push any change in the mobile device's location to the application 410 automatically through a registered URL. The microservice 422a may periodically perform positioning operations to determine the location of the mobile device in order to report changes to the application 410.

Similarly, the microservice 422a may use a webhook to obtain changes in the location of the mobile device. In this case, however, because the microservice 422a coordinates location determinations for certain types of positioning technologies (e.g., NR-based, Wi-Fi-based), the webhook may only apply to certain other types of positioning technologies (e.g., satellite-based, sensor-based). For example, if the location subsystem 432a coordinates satellite-based positioning via the satellite signal receiver 442a, it can report any detected change in location to the microservice 422a via the webhook.

In some cases, the application 410, the application service 420, the operating system 430, and the hardware 440 may be distributed across multiple devices (e.g., a UE, a web server, a location server, etc.). For example, the application 410 may be running on a location server (e.g., LMF 270), the application service 420 may be running on a web server, and the operating system 430 and hardware 440 may be incorporated in a UE (e.g., UE 204).

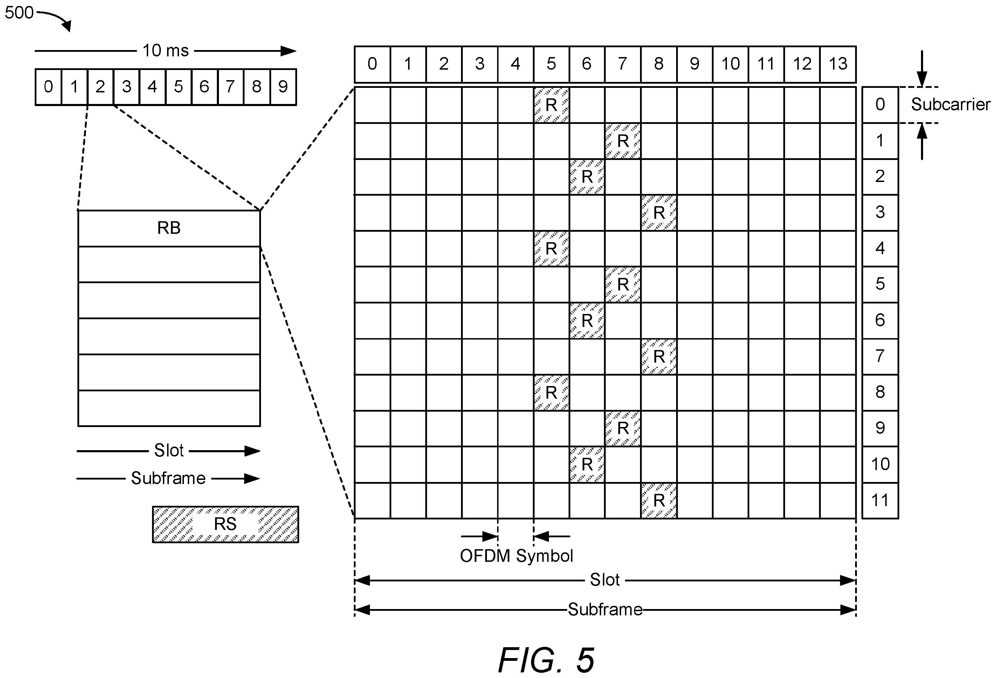

Various frame structures may be used to support downlink and uplink transmissions between network nodes (e.g., base stations and UEs). FIG. 5 is a diagram 500 illustrating an example frame structure, according to aspects of the disclosure. The frame structure may be a downlink or uplink frame structure. Other wireless communications technologies may have different frame structures and/or different channels.

LTE, and in some cases NR, utilizes orthogonal frequency-division multiplexing (OFDM) on the downlink and single-carrier frequency division multiplexing (SC-FDM) on the uplink. Unlike LTE, however, NR has an option to use OFDM on the uplink as well. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kilohertz (kHz) and the minimum resource allocation (resource block) may be 12 subcarriers (or 180 kHz). Consequently, the nominal fast Fourier transform (FFT) size may be equal to 128, 256, 512, 1024, or 2048 for system bandwidth of 1.25, 2.5, 5, 10, or 20 megahertz (MHz), respectively. The system bandwidth may also be partitioned into subbands. For example, a subband may cover 1.08 MHz (i.e., 6 resource blocks), and there may be 1, 2, 4, 8, or 16 subbands for system bandwidth of 1.25, 2.5, 5, 10, or 20 MHz, respectively.

LTE supports a single numerology (subcarrier spacing (SCS), symbol length, etc.). In contrast, NR may support multiple numerologies (µ), for example, subcarrier spacings of 15 kHz (µ=0), 30 kHz (µ=1), 60 kHz (µ=2), 120 kHz (µ=3), and 240 kHz (µ=4) or greater may be available. In each subcarrier spacing, there are 14 symbols per slot. For 15 kHz SCS (µ=0), there is one slot per subframe, 10 slots per frame, the slot duration is 1 millisecond (ms), the symbol duration is 66.7 microseconds (µs), and the maximum nominal system bandwidth (in MHz) with a 4K FFT size is 50. For 30 kHz SCS (µ=1), there are two slots per subframe, 20 slots per frame, the slot duration is 0.5 ms, the symbol duration is 33.3 µs, and the maximum nominal system bandwidth (in MHz) with a 4K FFT size is 100. For 60 kHz SCS (µ=2), there are four slots per subframe, 40 slots per frame, the slot duration is 0.25 ms, the symbol duration is 16.7 µs, and the maximum nominal system bandwidth (in MHz) with a 4K FFT size is 200. For 120 kHz SCS (µ=3), there are eight slots per subframe, 80 slots per frame, the slot duration is 0.125 ms, the symbol duration is 8.33 µs, and the maximum nominal system bandwidth (in MHz) with a 4K FFT size is 400. For 240 kHz SCS (µ=4), there are 16 slots per subframe, 160 slots per frame, the slot duration is 0.0625 ms, the symbol duration is 4.17 µs, and the maximum nominal system bandwidth (in MHz) with a 4K FFT size is 800.

In the example of FIG. 5, a numerology of 15 kHz is used. Thus, in the time domain, a 10 ms frame is divided into 10 equally sized subframes of 1 ms each, and each subframe includes one time slot. In FIG. 5, time is represented horizontally (on the X axis) with time increasing from left to right, while frequency is represented vertically (on the Y axis) with frequency increasing (or decreasing) from bottom to top.

A resource grid may be used to represent time slots, each time slot including one or more time-concurrent resource blocks (RBs) (also referred to as physical RBs (PRBs)) in the frequency domain. The resource grid is further divided into multiple resource elements (REs). An RE may correspond to one symbol length in the time domain and one subcarrier in the frequency domain. In the numerology of FIG. 5, for a normal cyclic prefix, an RB may contain 12 consecutive subcarriers in the frequency domain and seven consecutive symbols in the time domain, for a total of 84 REs. For an extended cyclic prefix, an RB may contain 12 consecutive subcarriers in the frequency domain and six consecutive symbols in the time domain, for a total of 72 REs. The number of bits carried by each RE depends on the modulation scheme.

Some of the REs may carry reference (pilot) signals (RS). The reference signals may include positioning reference signals (PRS), tracking reference signals (TRS), phase tracking reference signals (PTRS), cell-specific reference signals (CRS), channel state information reference signals (CSI-RS), demodulation reference signals (DMRS), primary synchronization signals (PSS), secondary synchronization signals (SSS), synchronization signal blocks (SSBs), sounding reference signals (SRS), etc., depending on whether the illustrated frame structure is used for uplink or downlink communication. FIG. 5 illustrates example locations of REs carrying a reference signal (labeled "R").

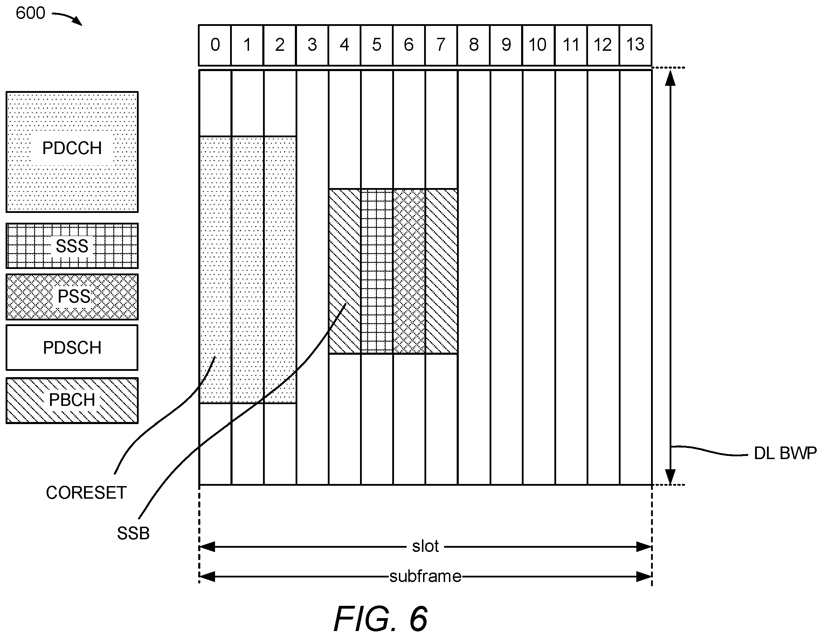

FIG. 6 is a diagram 600 illustrating various downlink channels within an example downlink slot. In FIG. 6, time is represented horizontally (on the X axis) with time increasing from left to right, while frequency is represented vertically (on the Y axis) with frequency increasing (or decreasing) from bottom to top. In the example of FIG. 6, a numerology of 15 kHz is used. Thus, in the time domain, the illustrated slot is one millisecond (ms) in length, divided into 14 symbols.

In NR, the channel bandwidth, or system bandwidth, is divided into multiple bandwidth parts (BWPs). A BWP is a contiguous set of RBs selected from a contiguous subset of the common RBs for a given numerology on a given carrier. Generally, a maximum of four BWPs can be specified in the downlink and uplink. That is, a UE can be configured with up to four BWPs on the downlink, and up to four BWPs on the uplink. Only one BWP (uplink or downlink) may be active at a given time, meaning the UE may only receive or transmit over one BWP at a time. On the downlink, the bandwidth of each BWP should be equal to or greater than the bandwidth of the SSB, but it may or may not contain the SSB.

Referring to FIG. 6, a primary synchronization signal (PSS) is used by a UE to determine subframe/symbol timing and a physical layer identity. A secondary synchronization signal (SSS) is used by a UE to determine a physical layer cell identity group number and radio frame timing. Based on the physical layer identity and the physical layer cell identity group number, the UE can determine a PCI. Based on the PCI, the UE can determine the locations of the aforementioned DL-RS. The physical broadcast channel (PBCH), which carries a master information block (MIB), may be logically grouped with the PSS and SSS to form an SSB (also referred to as an SS/PBCH). The MIB provides a number of RBs in the downlink system bandwidth and a system frame number (SFN). The physical downlink shared channel (PDSCH) carries user data, broadcast system information not transmitted through the PBCH, such as system information blocks (SIBs), and paging messages.

The physical downlink control channel (PDCCH) carries downlink control information (DCI) within one or more control channel elements (CCEs), each CCE including one or more RE group (REG) bundles (which may span multiple symbols in the time domain), each REG bundle including one or more REGs, each REG corresponding to 12 resource elements (one resource block) in the frequency domain and one OFDM symbol in the time domain. The set of physical resources used to carry the PDCCH/DCI is referred to in NR as the control resource set (CORESET). In NR, a PDCCH is confined to a single CORESET and is transmitted with its own DMRS. This enables UE-specific beamforming for the PDCCH.

In the example of FIG. 6, there is one CORESET per BWP, and the CORESET spans three symbols (although it may be only one or two symbols) in the time domain. Unlike LTE control channels, which occupy the entire system bandwidth, in NR, PDCCH channels are localized to a specific region in the frequency domain (i.e., a CORESET). Thus, the frequency component of the PDCCH shown in FIG. 6 is illustrated as less than a single BWP in the frequency domain. Note that although the illustrated CORESET is contiguous in the frequency domain, it need not be. In addition, the CORESET may span less than three symbols in the time domain.

The DCI within the PDCCH carries information about uplink resource allocation (persistent and non-persistent) and descriptions about downlink data transmitted to the UE, referred to as uplink and downlink grants, respectively. More specifically, the DCI indicates the resources scheduled for the downlink data channel (e.g., PDSCH) and the uplink data channel (e.g., physical uplink shared channel (PUSCH)). Multiple (e.g., up to eight) DCIs can be configured in the PDCCH, and these DCIs can have one of multiple formats. For example, there are different DCI formats for uplink scheduling, for downlink scheduling, for uplink transmit power control (TPC), etc. A PDCCH may be transported by 1, 2, 4, 8, or 16 CCEs in order to accommodate different DCI payload sizes or coding rates.

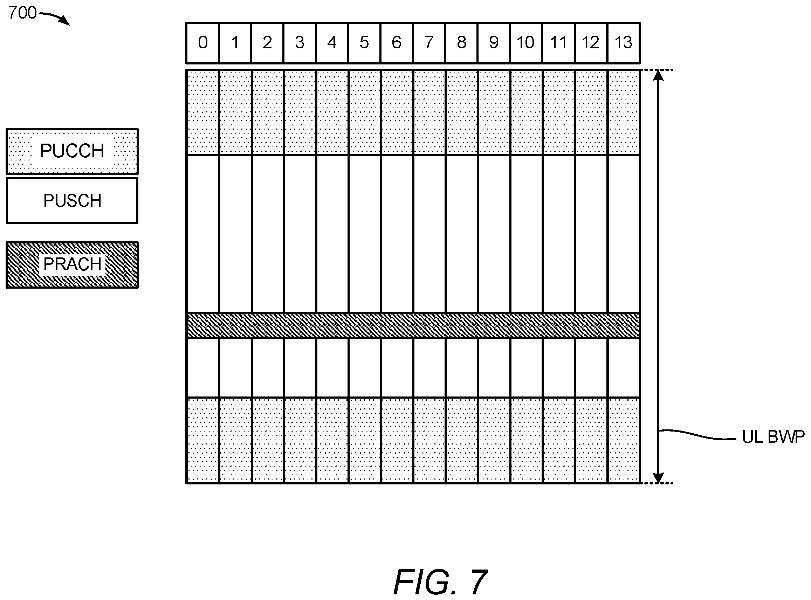

FIG. 7 is a diagram 700 illustrating various uplink channels within an example uplink slot. In FIG. 7, time is represented horizontally (on the X axis) with time increasing from left to right, while frequency is represented vertically (on the Y axis) with frequency increasing (or decreasing) from bottom to top. In the example of FIG. 7, a numerology of 15 kHz is used. Thus, in the time domain, the illustrated slot is one millisecond (ms) in length, divided into 14 symbols.

A random-access channel (RACH), also referred to as a physical random-access channel (PRACH), may be within one or more slots within a frame based on the PRACH configuration. The PRACH may include six consecutive RB pairs within a slot. The PRACH allows the UE to perform initial system access and achieve uplink synchronization. A physical uplink control channel (PUCCH) may be located on edges of the uplink system bandwidth. The PUCCH carries uplink control information (UCI), such as scheduling requests, CSI reports, a channel quality indicator (CQI), a precoding matrix indicator (PMI), a rank indicator (RI), and HARQ ACK/NACK feedback. The physical uplink shared channel (PUSCH) carries data, and may additionally be used to carry a buffer status report (BSR), a power headroom report (PHR), and/or UCI.

A collection of resource elements (REs) that are used for transmission of PRS is referred to as a "PRS resource." The collection of resource elements can span multiple PRBs in the frequency domain and 'N' (such as 1 or more) consecutive symbol(s) within a slot in the time domain. In a given OFDM symbol in the time domain, a PRS resource occupies consecutive PRBs in the frequency domain.

The transmission of a PRS resource within a given PRB has a particular comb size (also referred to as the "comb density"). A comb size 'N' represents the subcarrier spacing (or frequency/tone spacing) within each symbol of a PRS resource configuration. Specifically, for a comb size 'N,' PRS are transmitted in every Nth subcarrier of a symbol of a PRB. For example, for comb-4, for each symbol of the PRS resource configuration, REs corresponding to every fourth subcarrier (such as subcarriers 0, 4, 8) are used to transmit PRS of the PRS resource. Currently, comb sizes of comb-2, comb-4, comb-6, and comb-12 are supported for DL-PRS. FIG. 5 illustrates an example PRS resource configuration for comb-4 (which spans four symbols). That is, the locations of the shaded REs (labeled "R") indicate a comb-4 PRS resource configuration.

Currently, a DL-PRS resource may span 2, 4, 6, or 12 consecutive symbols within a slot with a fully frequency-domain staggered pattern. A DL-PRS resource can be configured in any higher layer configured downlink or flexible (FL) symbol of a slot. There may be a constant energy per resource element (EPRE) for all REs of a given DL-PRS resource. The following are the frequency offsets from symbol to symbol for comb sizes 2, 4, 6, and 12 over 2, 4, 6, and 12 symbols. 2-symbol comb-2: {0, 1}; 4-symbol comb-2: {0, 1, 0, 1}; 6-symbol comb-2: {0, 1, 0, 1, 0, 1}; 12-symbol comb-2: {0, 1, 0, 1, 0, 1, 0, 1, 0, 1, 0, 1}; 4-symbol comb-4: {0, 2, 1, 3} (as in the example of FIG. 5); 12-symbol comb-4: {0, 2, 1, 3, 0, 2, 1, 3, 0, 2, 1, 3}; 6-symbol comb-6: {0, 3, 1, 4, 2, 5}; 12-symbol comb-6: {0, 3, 1, 4, 2, 5, 0, 3, 1, 4, 2, 5}; and 12-symbol comb-12: {0, 6, 3, 9, 1, 7, 4, 10, 2, 8, 5, 11}.

A "PRS resource set" is a set of PRS resources used for the transmission of PRS signals, where each PRS resource has a PRS resource ID. In addition, the PRS resources in a PRS resource set are associated with the same TRP. A PRS resource set is identified by a PRS resource set ID and is associated with a particular TRP (identified by a TRP ID). In addition, the PRS resources in a PRS resource set have the same periodicity, a common muting pattern configuration, and the same repetition factor (such as "PRS-ResourceRepetitionFactor") across slots. The periodicity is the time from the first repetition of the first PRS resource of a first PRS instance to the same first repetition of the same first PRS resource of the next PRS instance. The periodicity may have a length selected from 2^µ*{4, 5, 8, 10, 16, 20, 32, 40, 64, 80, 160, 320, 640, 1280, 2560, 5120, 10240} slots, with µ = 0, 1, 2, 3. The repetition factor may have a length selected from {1, 2, 4, 6, 8, 16, 32} slots.

A PRS resource ID in a PRS resource set is associated with a single beam (or beam ID) transmitted from a single TRP (where a TRP may transmit one or more beams). That is, each PRS resource of a PRS resource set may be transmitted on a different beam, and as such, a "PRS resource," or simply "resource," also can be referred to as a "beam." Note that this does not have any implications on whether the TRPs and the beams on which PRS are transmitted are known to the UE.

A "PRS instance" or "PRS occasion" is one instance of a periodically repeated time window (such as a group of one or more consecutive slots) where PRS are expected to be transmitted. A PRS occasion also may be referred to as a "PRS positioning occasion," a "PRS positioning instance, a "positioning occasion," "a positioning instance," a "positioning repetition," or simply an "occasion," an "instance," or a "repetition."

A "positioning frequency layer" (also referred to simply as a "frequency layer") is a collection of one or more PRS resource sets across one or more TRPs that have the same values for certain parameters. Specifically, the collection of PRS resource sets has the same subcarrier spacing and cyclic prefix (CP) type (meaning all numerologies supported for the physical downlink shared channel (PDSCH) are also supported for PRS), the same Point A, the same value of the downlink PRS bandwidth, the same start PRB (and center frequency), and the same comb-size. The Point A parameter takes the value of the parameter "ARFCN-ValueNR" (where "ARFCN" stands for "absolute radio-frequency channel number") and is an identifier/code that specifies a pair of physical radio channel used for transmission and reception. The downlink PRS bandwidth may have a granularity of four PRBs, with a minimum of 24 PRBs and a maximum of 272 PRBs. Currently, up to four frequency layers have been defined, and up to two PRS resource sets may be configured per TRP per frequency layer.

The concept of a frequency layer is somewhat like the concept of component carriers and bandwidth parts (BWPs), but different in that component carriers and BWPs are used by one base station (or a macro cell base station and a small cell base station) to transmit data channels, while frequency layers are used by several (usually three or more) base stations to transmit PRS. A UE may indicate the number of frequency layers it can support when it sends the network its positioning capabilities, such as during an LTE positioning protocol (LPP) session. For example, a UE may indicate whether it can support one or four positioning frequency layers.

Note that the terms "positioning reference signal" and "PRS" generally refer to specific reference signals that are used for positioning in NR and LTE systems. However, as used herein, the terms "positioning reference signal" and "PRS" may also refer to any type of reference signal that can be used for positioning, such as but not limited to, PRS as defined in LTE and NR, TRS, PTRS, CRS, CSI-RS, DMRS, PSS, SSS, SSB, SRS, UL-PRS, etc. In addition, the terms "positioning reference signal" and "PRS" may refer to downlink, uplink, or sidelink positioning reference signals, unless otherwise indicated by the context. If needed to further distinguish the type of PRS, a downlink positioning reference signal may be referred to as a "DL-PRS," an uplink positioning reference signal (e.g., an SRS-for-positioning, PTRS) may be referred to as an "UL-PRS," and a sidelink positioning reference signal may be referred to as an "SL-PRS." In addition, for signals that may be transmitted in the downlink, uplink, and/or sidelink (e.g., DMRS), the signals may be prepended with "DL," "UL," or "SL" to distinguish the direction. For example, "UL-DMRS" is different from "DL-DMRS."

The following are the currently supported DCI formats. Format 0-0: fallback for scheduling of PUSCH; Format 0-1: non-fallback for scheduling of PUSCH; Format 1-0: fallback for scheduling of PDSCH; Format 1-1: non-fallback for scheduling of PDSCH; Format 2-0: notifying a group of UEs of the slot format; Format 2-1: notifying a group of UEs of the PRB(s) and OFDM symbol(s) where the UEs may assume no transmissions are intended for the UEs; Format 2-2: transmission of TPC commands for PUCCH and PUSCH; and Format 2-3: transmission of a group of SRS requests and TPC commands for SRS transmissions. Note that a fallback format is a default scheduling option that has non-configurable fields and supports basic NR operations. In contrast, a non-fallback format is flexible to accommodate NR features.

In an aspect, the reference signal carried on the REs labeled "R" in FIG. 5 may be SRS. SRS transmitted by a UE may be used by a base station to obtain the channel state information (CSI) for the transmitting UE. CSI describes how an RF signal propagates from the UE to the base station and represents the combined effect of scattering, fading, and power decay with distance. The system uses the SRS for resource scheduling, link adaptation, massive MIMO, beam management, etc.

A collection of REs that are used for transmission of SRS is referred to as an "SRS resource," and may be identified by the parameter "SRS-ResourceId." The collection of resource elements can span multiple PRBs in the frequency domain and 'N' (e.g., one or more) consecutive symbol(s) within a slot in the time domain. In a given OFDM symbol, an SRS resource occupies one or more consecutive PRBs. An "SRS resource set" is a set of SRS resources used for the transmission of SRS signals, and is identified by an SRS resource set ID ("SRS-ResourceSetId").

The transmission of SRS resources within a given PRB has a particular comb size (also referred to as the "comb density"). A comb size 'N' represents the subcarrier spacing (or frequency/tone spacing) within each symbol of an SRS resource configuration. Specifically, for a comb size 'N,' SRS are transmitted in every Nth subcarrier of a symbol of a PRB. For example, for comb-4, for each symbol of the SRS resource configuration, REs corresponding to every fourth subcarrier (such as subcarriers 0, 4, 8) are used to transmit SRS of the SRS resource. In the example of FIG. 5, the illustrated SRS is comb-4 over four symbols. That is, the locations of the shaded SRS REs indicate a comb-4 SRS resource configuration.

Currently, an SRS resource may span 1, 2, 4, 8, or 12 consecutive symbols within a slot with a comb size of comb-2, comb-4, or comb-8. The following are the frequency offsets from symbol to symbol for the SRS comb patterns that are currently supported. 1-symbol comb-2: {0}; 2-symbol comb-2: {0, 1}; 2-symbol comb-4: {0, 2}; 4-symbol comb-2: {0, 1, 0, 1}; 4-symbol comb-4: {0, 2, 1, 3} (as in the example of FIG. 5); 8-symbol comb-4: {0, 2, 1, 3, 0, 2, 1, 3}; 12-symbol comb-4: {0, 2, 1, 3, 0, 2, 1, 3, 0, 2, 1, 3}; 4-symbol comb-8: {0, 4, 2, 6}; 8-symbol comb-8: {0, 4, 2, 6, 1, 5, 3, 7}; and 12-symbol comb-8: {0, 4, 2, 6, 1, 5, 3, 7, 0, 4, 2, 6}.

Generally, as noted above, a UE transmits SRS to enable the receiving base station (either the serving base station or a neighboring base station) to measure the channel quality (i.e., CSI) between the UE and the base station. However, SRS can also be specifically configured as uplink positioning reference signals for uplink-based positioning procedures, such as uplink time difference of arrival (UL-TDOA), round-trip-time (RTT), uplink angle-of-arrival (UL-AoA), etc. As used herein, the term "SRS" may refer to SRS configured for channel quality measurements or SRS configured for positioning purposes. The former may be referred to herein as "SRS-for-communication" and/or the latter may be referred to as "SRS-for-positioning" or "positioning SRS" when needed to distinguish the two types of SRS.

Several enhancements over the previous definition of SRS have been proposed for SRS-for-positioning (also referred to as "UL-PRS"), such as a new staggered pattern within an SRS resource (except for single-symbol/comb-2), a new comb type for SRS, new sequences for SRS, a higher number of SRS resource sets per component carrier, and a higher number of SRS resources per component carrier. In addition, the parameters "SpatialRelationInfo" and "PathLossReference" are to be configured based on a downlink reference signal or SSB from a neighboring TRP. Further still, one SRS resource may be transmitted outside the active BWP, and one SRS resource may span across multiple component carriers. Also, SRS may be configured in RRC connected state and only transmitted within an active BWP. Further, there may be no frequency hopping, no repetition factor, a single antenna port, and new lengths for SRS (e.g., 8 and 12 symbols). There also may be open-loop power control and not closed-loop power control, and comb-8 (i.e., an SRS transmitted every eighth subcarrier in the same symbol) may be used. Lastly, the UE may transmit through the same transmit beam from multiple SRS resources for UL-AoA. All of these are features that are additional to the current SRS framework, which is configured through RRC higher layer signaling (and potentially triggered or activated through a MAC control element (MAC-CE) or downlink control information (DCI)).

As will be appreciated, a UE needs to be able to demodulate (also referred to as "decode") the PDCCH in order to read the DCI, and thereby to obtain the scheduling of resources allocated to the UE on the PDSCH and PUSCH. If the UE fails to demodulate the PDCCH, then the UE will not know the locations of the PDSCH resources and it will keep attempting to demodulate the PDCCH using a different set of PDCCH candidates in subsequent PDCCH monitoring occasions. If the UE fails to demodulate the PDCCH after some number of attempts, the UE declares a radio link failure (RLF). To overcome PDCCH demodulation issues, search spaces are configured for efficient PDCCH detection and demodulation.

Generally, a UE does not attempt to demodulate each and every PDCCH candidate that may be scheduled in a slot. To reduce restrictions on the PDCCH scheduler, and at the same time to reduce the number of blind demodulation attempts by the UE, search spaces are configured. Search spaces are indicated by a set of contiguous CCEs that the UE is expected to monitor for scheduling assignments/grants relating to a certain component carrier. There are two types of search spaces used for the PDCCH to control each component carrier, a common search space (CSS) and a UE-specific search space (USS).

A common search space is shared across all UEs, and a UE-specific search space is used per UE (i.e., a UE-specific search space is specific to a specific UE). For a common search space, a DCI cyclic redundancy check (CRC) is scrambled with a system information radio network temporary identifier (SI-RNTI), random access RNTI (RA-RNTI), temporary cell RNTI (TC-RNTI), paging RNTI (P-RNTI), interruption RNTI (INT-RNTI), slot format indication RNTI (SFI-RNTI), TPC-PUCCH-RNTI, TPC-PUSCH-RNTI, TPC-SRS-RNTI, cell RNTI (C-RNTI), or configured scheduling RNTI (CS-RNTI) for all common procedures. For a UE-specific search space, a DCI CRC is scrambled with a C-RNTI or CS-RNTI, as these are specifically targeted to individual UE.

A UE demodulates the PDCCH using the four UE-specific search space aggregation levels (1, 2, 4, and 8) and the two common search space aggregation levels (4 and 8). Specifically, for the UE-specific search spaces, aggregation level '1' has six PDCCH candidates per slot and a size of six CCEs. Aggregation level '2' has six PDCCH candidates per slot and a size of 12 CCEs. Aggregation level '4' has two PDCCH candidates per slot and a size of eight CCEs. Aggregation level '8' has two PDCCH candidates per slot and a size of 16 CCEs. For the common search spaces, aggregation level '4' has four PDCCH candidates per slot and a size of 16 CCEs. Aggregation level '8' has two PDCCH candidates per slot and a size of 16 CCEs.

Each search space comprises a group of consecutive CCEs that could be allocated to a PDCCH, referred to as a PDCCH candidate. A UE demodulates all of the PDCCH candidates in these two search spaces (USS and CSS) to discover the DCI for that UE. For example, the UE may demodulate the DCI to obtain the scheduled uplink grant information on the PUSCH and the downlink resources on the PDSCH. Note that the aggregation level is the number of REs of a CORESET that carry a PDCCH DCI message, and is expressed in terms of CCEs. There is a one-to-one mapping between the aggregation level and the number of CCEs per aggregation level. That is, for aggregation level '4,' there are four CCEs. Thus, as shown above, if the aggregation level is '4' and the number of PDCCH candidates in a slot is '2,' then the size of the search space is '8' (i.e., 4 x 2 = 8).

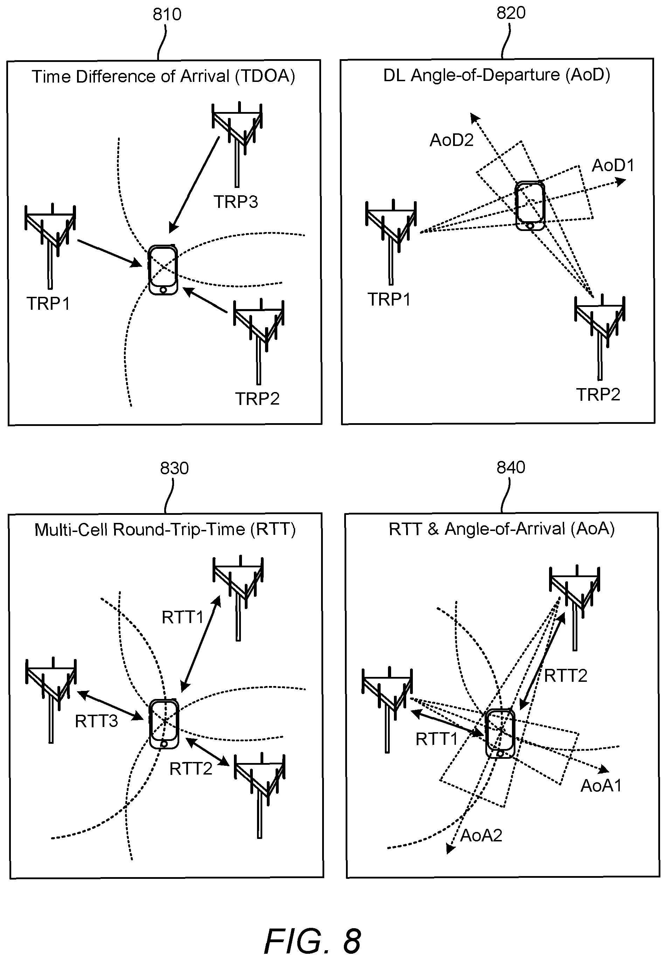

NR supports a number of cellular network-based positioning technologies, including downlink-based, uplink-based, and downlink-and-uplink-based positioning methods. Downlink-based positioning methods include observed time difference of arrival (OTDOA) in LTE, downlink time difference of arrival (DL-TDOA) in NR, and downlink angle-of-departure (DL-AoD) in NR. FIG. 8 illustrates examples of various positioning methods, according to aspects of the disclosure. In an OTDOA or DL-TDOA positioning procedure, illustrated by scenario 810, a UE measures the differences between the times of arrival (ToAs) of reference signals (e.g., positioning reference signals (PRS)) received from pairs of base stations, referred to as reference signal time difference (RSTD) or time difference of arrival (TDOA) measurements, and reports them to a positioning entity. More specifically, the UE receives the identifiers (IDs) of a reference base station (e.g., a serving base station) and multiple non-reference base stations in assistance data. The UE then measures the RSTD between the reference base station and each of the non-reference base stations. Based on the known locations of the involved base stations and the RSTD measurements, the positioning entity (e.g., the UE for UE-based positioning or a location server for UE-assisted positioning) can estimate the UE's location.

For DL-AoD positioning, illustrated by scenario 820, the positioning entity uses a measurement report from the UE of received signal strength measurements of multiple downlink transmit beams to determine the angle(s) between the UE and the transmitting base station(s). The positioning entity can then estimate the location of the UE based on the determined angle(s) and the known location(s) of the transmitting base station(s).

Uplink-based positioning methods include uplink time difference of arrival (UL-TDOA) and uplink angle-of-arrival (UL-AoA). UL-TDOA is similar to DL-TDOA, but is based on uplink reference signals (e.g., sounding reference signals (SRS)) transmitted by the UE to multiple base stations. Specifically, a UE transmits one or more uplink reference signals that are measured by a reference base station and a plurality of non-reference base stations. Each base station then reports the reception time (referred to as the relative time of arrival (RTOA)) of the reference signal(s) to a positioning entity (e.g., a location server) that knows the locations and relative timing of the involved base stations. Based on the reception-to-reception (Rx-Rx) time difference between the reported RTOA of the reference base station and the reported RTOA of each non-reference base station, the known locations of the base stations, and their known timing offsets, the positioning entity can estimate the location of the UE using TDOA.

For UL-AoA positioning, one or more base stations measure the received signal strength of one or more uplink reference signals (e.g., SRS) received from a UE on one or more uplink receive beams. The positioning entity uses the signal strength measurements and the angle(s) of the receive beam(s) to determine the angle(s) between the UE and the base station(s). Based on the determined angle(s) and the known location(s) of the base station(s), the positioning entity can then estimate the location of the UE.

Downlink-and-uplink-based positioning methods include enhanced cell-ID (E-CID) positioning and multi-round-trip-time (RTT) positioning (also referred to as "multi-cell RTT" and "multi-RTT"). In an RTT procedure, a first entity (e.g., a base station or a UE) transmits a first RTT-related signal (e.g., a PRS or SRS) to a second entity (e.g., a UE or base station), which transmits a second RTT-related signal (e.g., an SRS or PRS) back to the first entity. Each entity measures the time difference between the time of arrival (ToA) of the received RTT-related signal and the transmission time of the transmitted RTT-related signal. This time difference is referred to as a reception-to-transmission (Rx-Tx) time difference. The Rx-Tx time difference measurement may be made, or may be adjusted, to include only a time difference between nearest slot boundaries for the received and transmitted signals. Both entities may then send their Rx-Tx time difference measurement to a location server (e.g., an LMF 270), which calculates the round trip propagation time (i.e., RTT) between the two entities from the two Rx-Tx time difference measurements (e.g., as the sum of the two Rx-Tx time difference measurements). Alternatively, one entity may send its Rx-Tx time difference measurement to the other entity, which then calculates the RTT. The distance between the two entities can be determined from the RTT and the known signal speed (e.g., the speed of light). For multi-RTT positioning, illustrated by scenario 830, a first entity (e.g., a UE or base station) performs an RTT positioning procedure with multiple second entities (e.g., multiple base stations or UEs) to enable the location of the first entity to be determined (e.g., using multilateration) based on distances to, and the known locations of, the second entities. RTT and multi-RTT methods can be combined with other positioning techniques, such as UL-AoA and DL-AoD, to improve location accuracy, as illustrated by scenario 840.

The E-CID positioning method is based on radio resource management (RRM) measurements. In E-CID, the UE reports the serving cell ID, the timing advance (TA), and the identifiers, estimated timing, and signal strength of detected neighbor base stations. The location of the UE is then estimated based on this information and the known locations of the base station(s).

To assist positioning operations, a location server (e.g., location server 230, LMF 270, SLP 272) may provide assistance data to the UE. For example, the assistance data may include identifiers of the base stations (or the cells/TRPs of the base stations) from which to measure reference signals, the reference signal configuration parameters (e.g., the number of consecutive slots including PRS, periodicity of the consecutive slots including PRS, muting sequence, frequency hopping sequence, reference signal identifier, reference signal bandwidth, etc.), and/or other parameters applicable to the particular positioning method. Alternatively, the assistance data may originate directly from the base stations themselves (e.g., in periodically broadcasted overhead messages, etc.). In some cases, the UE may be able to detect neighbor network nodes itself without the use of assistance data.

In the case of an OTDOA or DL-TDOA positioning procedure, the assistance data may further include an expected RSTD value and an associated uncertainty, or search window, around the expected RSTD. In some cases, the value range of the expected RSTD may be +/- 500 microseconds (µs). In some cases, when any of the resources used for the positioning measurement are in FR1, the value range for the uncertainty of the expected RSTD may be +/- 32 µs. In other cases, when all of the resources used for the positioning measurement(s) are in FR2, the value range for the uncertainty of the expected RSTD may be +/- 8 µs.

A location estimate may be referred to by other names, such as a position estimate, location, position, position fix, fix, or the like. A location estimate may be geodetic and comprise coordinates (e.g., latitude, longitude, and possibly altitude) or may be civic and comprise a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence).

In some designs, SRS for positioning (SRS-P) can be configured to be transmitted in RRC_INACTIVE state. For example, periodic and semi-persistent Positioning SRS can be configured for SRS-P transmission in RRC_INACTIVE. In a specific example, *RRCRelease(SuspendConfig[SRS-PosRRC-InactiveConfig])* may be used to configure SRS-P for RRC_INACTIVE state, e.g.:

**Table 1**

| ***SRS-PosRRC-InactiveConfig*** field descriptions |
|---|
| ***bwp:*** BWP configuration for SRS for Positioning during the RRC_INACTIVE state. If the field is absent UE is configured with an SRS for Positioning associated with the initial UL BWP and transmitted, during the RRC_INACTIVE state, inside the initial UL BWP with the same CP and SCS as configured for initial UL BWP. |
| ***InactivePosSRS-RSRP-changeThres***: RSRP threshold for the increase/decrease of RSRP for time alignment validation |
| ***InactivePosSRS-AbsThreshSS-BlocksConsolidation***: absolute RSRP threshold for determining the set of SSBs for derivation of downlink pathloss reference for TA validation. |
| ***srs-TimeAlignmentTimer***:TA timer for SRS for Positioning transmission during RRC_INACTIVE State. |

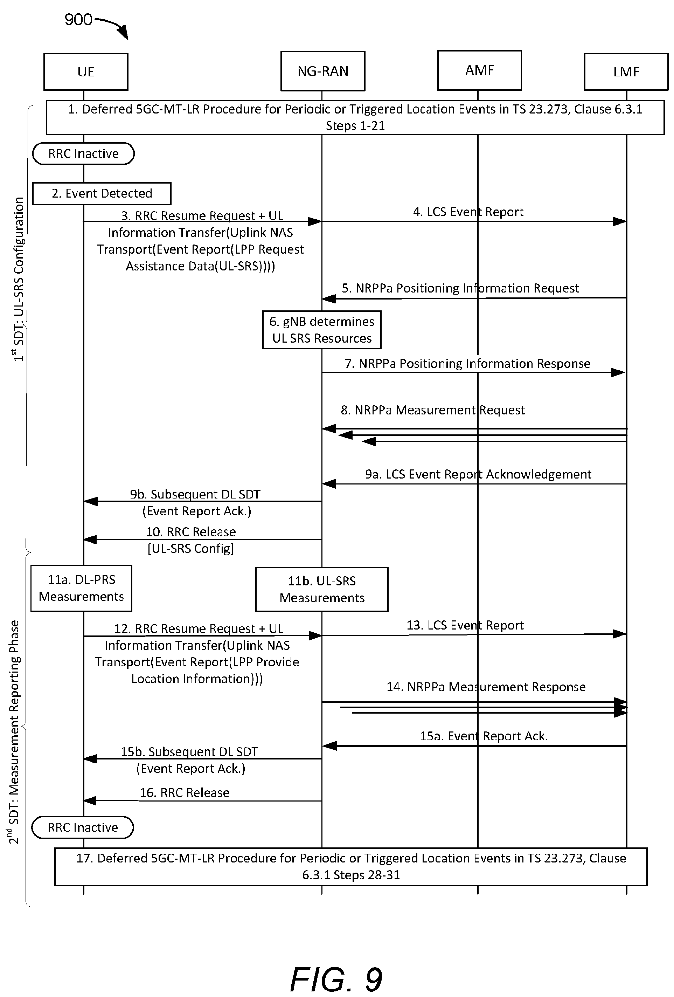

FIG. 9 illustrates a periodic and triggered 5GC-mobile terminated (MT)-location request (LR) procedure 900 with small data transmission (SDT) UL and DL positioning, in accordance with aspects of the disclosure. The procedure 900 can be broadly characterized as comprising a first SDT procedure for SRS-P configuration between (1)-(10) and a second SDT procedure for measurement reporting between (11a)-(17).

Referring to FIG. 9, when an event is triggered at (2), UE sends a request for SRS using SDT (3). SRS Configuration is provided in RRC Release (10) which completes the 1^{st} SDT. After performing DL measurements (11a), UE reports measurements (12). For additional context, it is noted that UL-only positioning would use the first SDT procedure only, and DL-only positioning would use the second SDT procedure only. Location request information and assistance data are pre-configured (1). The remainder of the process 900 is generally well-known and as such will not be described further herein for the sake of brevity.

In some designs, RRC configures parameters for TA validation of the SRS-P transmission in RRC_INACTIVE. For example, the SDT solution may be followed. In an aspect, the MAC entity shall, if the TA of the configured Positioning SRS is valid, transmit Positioning Periodic SRS or Semi-Persistent SRS as defined in TS 38.214. In an aspect, the MAC may consider the TA to be valid when the following condition is fulfilled if, compared to the stored downlink pathloss reference RSRP value, the current RSRP value of the downlink pathloss reference has not increased/decreased by more than *inactivePosSRS-RSRP-ChangeThreshold*. In an aspect, the UE may release any *srs-PosRRC-InactiveConfig* if the UE performs connection resumption in a different cell than the cell where *srs-PosRRC-InactiveConfig* was configured (e.g., TA timer configuration is invalidated upon any cell reselection). In an aspect, the RRC-configured parameters may include, e.g.:
- *inactivePosSRS-TimeAlignmentTimer* controls how long the MAC entity considers the Positioning SRS transmission in RRC_INACTIVE to be uplink time aligned,
- *inactivePosSRS-RSRP-ChangeThreshold*: RSRP threshold for the increase/decrease of RSRP for time alignment validation,
- *inactivePosSRS-NrOfSS-BlocksToAverage:* number of SSBs with highest RSRPs for derivation of downlink pathloss reference for TA validation, and
- *inactivePosSRS-AbsThreshSS-BlocksConsolidation:* absolute RSRP threshold for determining the set of SSBs for derivation of downlink pathloss reference for TA validation.

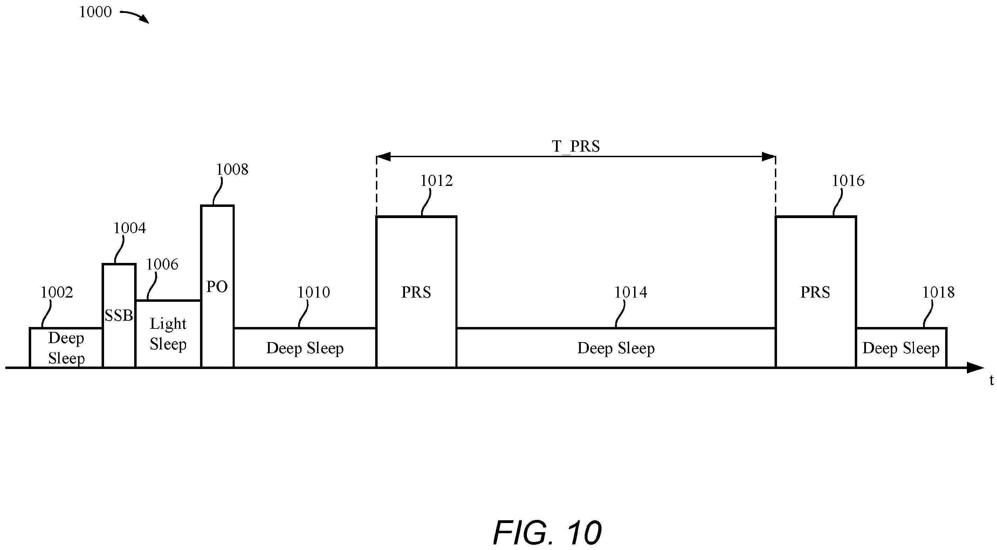

FIG. 10 illustrates a DL-only positioning procedure 1000, in accordance with aspects of the disclosure. The DL-only positioning procedure 1000 corresponds to a different representation of the second SDT procedure between (11a)-(17) of the process 900 of FIG. 9.

Referring to FIG. 10, at 1002, a UE is in deep sleep. At 1004, the UE wakes up and receives SSB. At 1006, the UE transitions to light sleep mode. At 1008, the UE wakes up and monitors a paging opportunity (PO) (e.g., a paging PDCCH). At 1010, the UE returns to deep sleep. At 1012, the UE wakes up and receives/measures DL-PRS. At 1014, the UE returns to deep sleep. At 1016, the UE wakes up and receives/measures DL-PRS. At 1018, the UE returns to deep.

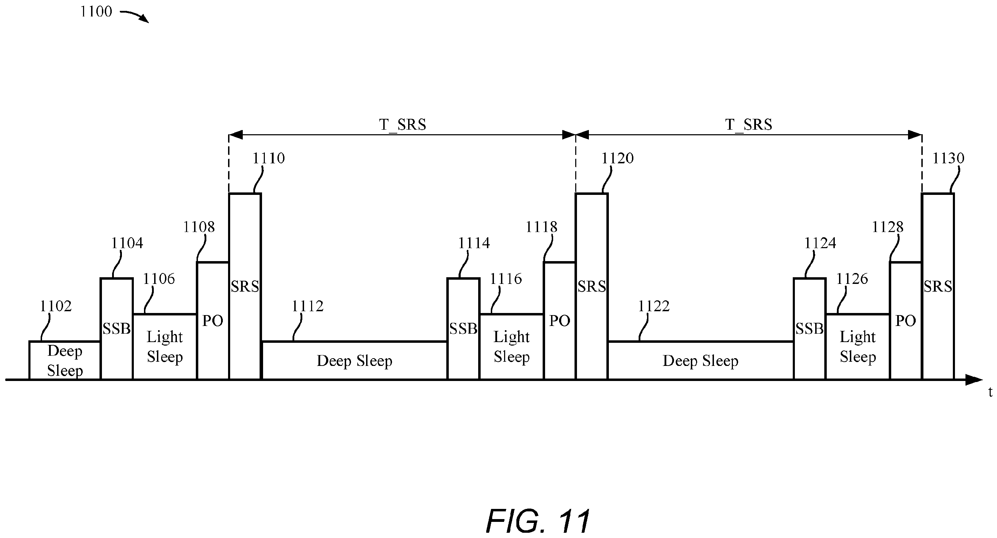

FIG. 11 illustrates a UL-only positioning procedure 1100, in accordance with aspects of the disclosure. The UL-only positioning procedure 1100 corresponds to a different representation of the first SDT procedure between (1)-(10) of the process 900 of FIG. 9.

Referring to FIG. 11, at 1102, a UE is in deep sleep. At 1104, the UE wakes up and receives SSB. At 1106, the UE transitions to light sleep mode. At 1108, the UE wakes up and monitors a paging opportunity (PO) (e.g., a paging PDCCH). At 1110, the UE transmits SRS-P. At 1112, the UE returns to deep sleep. At 1114, the UE wakes up and receives SSB. At 1116, the UE transitions to light sleep mode. At 1118, the UE wakes up and monitors a PO (e.g., a paging PDCCH). At 1120, the UE transmits SRS-P. At 1122, the UE returns to deep sleep. At 1124, the UE wakes up and receives SSB. At 1126, the UE transitions to light sleep mode. At 1128, the UE wakes up and monitors a PO (e.g., a paging PDCCH). At 1130, the UE transmits SRS-P, after which the UE returns to deep sleep.

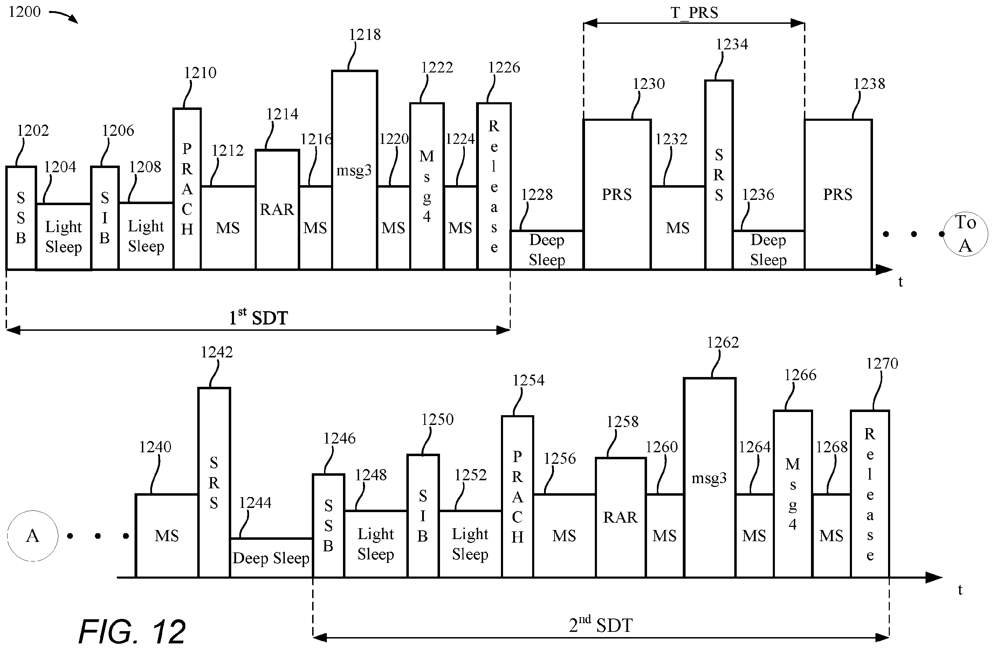

FIG. 12 illustrates a DL+UL positioning procedure 1200, in accordance with aspects of the disclosure. The DL+UL positioning procedure 1200 corresponds to a different representation of both the first SDT procedure between (1)-(10) of the process 900 of FIG. 9 the second SDT procedure between (11a-17) of the process 900 of FIG. 9. The DL+UL positioning procedure 1200 is described with respect to a 4-Step RACH procedure.

Referring to FIG. 12, at 1202, the UE wakes up and receives SIB. At 1204, the UE transitions to light sleep (e.g., for 10 ms). At 1206, the UE wakes up and receives SIB. At 1208, the UE transitions to light sleep (e.g., for 10 ms). At 1210, the UE wakes up and transmits PRACH preamble. At 1212, the UE transitions to micro sleep (MS) (e.g., for 4 ms). At 1214, the UE wakes up and receives the random access response (RAR). At 1216, the UE transitions to MS (e.g., for 2 MS). At 1218, the UE wakes up and transmits Msg3. At 1220, the UE transitions to MS (e.g., for 2 ms). At 1222, the UE wakes up and receives Msg4. At 1224, the UE transitions to MS (e.g., for 2 ms). At 1226, the UE wakes up and receives RRC Release. At 1228, the UE transitions to deep sleep. At 1230, the UE wakes up and receives DL-PRS. At 1232, the UE transitions to MS (e.g., for 5 ms). At 1234, the UE wakes up and transmits SRS-P. At 1236, the UE transitions to deep sleep. At 1238, the UE wakes up and receives DL-PRS. At 1240, the UE transitions to MS (e.g., for 5 ms). At 1242, the UE wakes up and transmits SRS-P. At 1244, the UE transitions to deep sleep. At 1246, the UE wakes up and receives SSB. At 1248, the UE transitions to light sleep (e.g., for 10 ms). At 1250, the UE wakes up and receives SIB. At 1252, the UE transitions to light sleep (e.g., for 10 ms). At 1254, the UE wakes up and transmits PRACH preamble. At 1256, the UE transitions to MS (e.g., for 4 ms). At 1258, the UE wakes up and receives the random access response (RAR). At 1260, the UE transitions to MS (e.g., for 2 MS). At 1262, the UE wakes up and transmits Msg3. At 1264, the UE transitions to MS (e.g., for 2 ms). At 1266, the UE wakes up and receives Msg4. At 1268, the UE transitions to MS (e.g., for 2 ms). At 1270, the UE wakes up and receives RRC Release.

Referring to FIG. 12, as noted above, the process 1200 may include two SDT procedures to complete a DL+UL positioning flow, where in the first, the SRS Configuration is provided to the UE, and the second is for the purpose of measurement reporting in RRC Inactive. As in FIG. 9, when an event is triggered, UE sends a request (3) for SRS using SDT. SRS configuration is provided in RRC Release (10) which completes the first SDT procedure. After performing DL measurements, UE reports measurements using the second SDT procedure (12). As noted above, UL-only positioning would use the first SDT procedure only, and DL-only positioning would use the second SDT procedure only.

PDCCH-based signaling was adopted for Rel-17 Paging Early Indicator (PEI) design. A new DCI format 2_7 is used for the PEI PDCCH. In the new DCI format 2_7, one bit in the DCI payload indicates one UE sub-group or one UE group of a PO depending on whether sub-grouping is configured. PEI does not carry SI change indication or Earthquake and Tsunami Warning System (ETWS) / Commercial Mobile Alert Service (CMAS) notification. UE receives paging PDCCH as indicated by PEI to receive this information.

In terms of UE behavior, PEI acts as a wakeup signal, and UE does not process paging PDCCH on the upcoming PO if PEI is not detected. In some designs, whether or not the UE monitors for PEI is up to UE implementation. If UE decides to not to monitor PEI, it monitors, the UE may monitor the PO according to TS 38.304. In some designs, UE does not expect to process information from more than one DCI with CRC scrambled with RNTIs for broadcast or UE group common information in the same slot (follow subclause 10.1 of TS 38. 213). In some designs, UE does not receive paging PDCCH and PEI in same slot.

In some designs, a PEI may be used to page a sub-group of UEs. For example, UEs sharing the same PO may be divided into multiple paging sub-groups. The PEI may be configured to indicate which paging sub-group has a new page (e.g., if at least one UE in a sub-group of UEs will be paged, then each UE in the sub-group of UEs is instructed to monitor the corresponding PO via the PEI). In this case, only UEs associated with that particular paging subgroup, instead of all UEs sharing the PO, wake up to receive the page. In some designs, up to a maximum of 8 subgroups can be configured (e.g., for a 3-bit PEI). In some designs, PEI without sub-grouping can be implemented by configuring PEI with only one sub-group

In some designs, UE are assigned to sub-groups by a core network component. For example, the core network component assigns UE(s) a sub-group ID via NAS signaling, e.g. based on UE characteristics such as paging probability. In some designs, the same core network-assigned sub-group ID is used across all cells in a TA and for both core network paging and RAN paging. In some designs, a total number of core network-assigned subgroups is up to network configuration (e.g. by an operations, administration and maintenance (OA&M) component). Alternatively, UE(s) may be assigned to sub-group(s) based on UE ID. For example, if UE supports PEI, UE may support UE-ID based sub-grouping. In an aspect, the UE hashes its UE-ID to derive its subgroup ID. In some designs, 5G-S-TMSI mod 8192 may be utilized if UE does not use eDRX, and 5G-S-TMSI mod 32768 may be utilized if UE uses eDRX.

In some designs, the following information is transmitted by means of the DCI format 1_0 with CRC scrambled by P-RNTI:
- Short Messages Indicator - 2 bits.
- Short Messages - 8 bits. If only the scheduling information for Paging is carried, this bit field is reserved.
- Frequency domain resource assignment - $\left⌈{log}_{2}\left({N}_{RB}^{DL , BWP}\left({N}_{RB}^{DL , BWP}+1\right)/2\right)\right⌉$ bits. If only the short message is carried, this bit field is reserved. ${N}_{RB}^{DL , BWP}$ is the size of CORESET 0.
- Time domain resource assignment - 4 bits. If only the short message is carried, this bit field is reserved.
- VRB-to-PRB mapping - 1 bit. If only the short message is carried, this bit field is reserved.
- Modulation and coding scheme - 5 bits. If only the short message is carried, this bit field is reserved.
- TB scaling - 2 bits. If only the short message is carried, this bit field is reserved.
- Reserved bits - 6 bits.

In some designs, DCI format 2_7 is used for notifying the paging early indication and TRS availability indication for one or more UEs. The following information is transmitted by means of the DCI format 2_7 with CRC scrambled by PEI-RNTI:
- Paging indication field *-* ${N}_{PO}^{PEI} {N}_{SG}^{PO}$ bit(s),
   where ${N}_{PO}^{PEI}$ is the number of paging occasions configured by higher layer parameter *PONumPerPEI,* ${N}_{SG}^{PO}$ is the number of sub-groups of a paging occasion configured by higher layer parameter *subgroupsNumPerPO,* if *subgroupsNumPerPO* is configured; otherwise ${N}_{SG}^{PO}$ is set to 1, and each bit in the field indicates one UE subgroup of a paging occasion if *subgroupsNumPerPO* is configured; otherwise each bit in the field indicates the UE group of a paging occasion, and
- TRS availability indication - 1, 2, 3, 4, 5, or 6 bits if *TRS-ResourceSetConfig* is configured; 0 bits otherwise.

In some designs, the size of DCI format 2_7 is indicated by the higher layer parameter *payloadSizeDCI*_*format2*_*7*. In some designs, the number of information bits in format 2_7 shall be equal to or less than the payload size of format 2_7. In some designs, if the number of information bits in format 2_7 is less than the size of format 2_7, the remaining bits are reserved.

In some designs, whether TRS is transmitted is indicated by L1 signaling in both paging PDCCH and PEI. The same design principle for TRS availability indication may be utilized for the two DCI formats (1_0 and 2_7). In some designs, TRS availability information in paging PDCCH decouples the support of PEI and TRS features. Once TRS resource is configured in SIB, L1 based availability indication is always enabled for all configured TRS resources. A UE can receive different TRS availability indication content from PEI and associated paging PDCCH. In some designs, it is up to UE implementation whether UE receives both PEI and paging PDCCH to receive TRS availability indication. In some designs, UE is not required to receive paging PDCCH if PEI indicates the UE's group or sub-group is not paged.

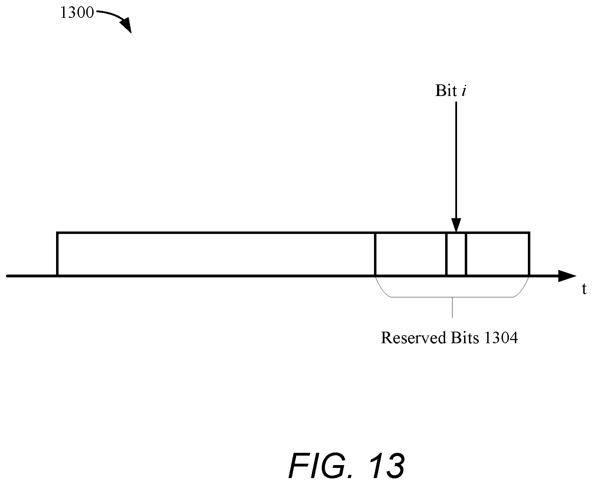

FIG. 13 illustrates a paging PDCCH configuration 1300 in accordance with aspects of the disclosure. The paging PDCCH configuration 1300 comprises a TRS availability indication bitmap 1304 with a number of reserved bits. For example, the TRS availability indication bitmap 1304 may comprise up to 6 bits (e.g., 6 is the number of reserved bits in paging PDCCH). In some designs, TRS resource set configuration provides a group ID, group ID value i maps to bit i in the TRS availability indication bitmap 1304. In some designs, multiple TRS resource set can be configured with same group ID. In some designs, if bit value ='1', then TRS resource set(s) are available, and if bit value = '0', then UE keeps early received availability information. In some designs, a starting bit of the TRS availability indication bitmap 1304 in the paging PDCCH 1300 is the first bit in the reserved bits. In PEI, TRS availability indication field starts from the next bit after the end of the paging indication field.

In some designs, TRS at the configured occasion(s) is available for a time duration if indicated. In some designs, a start of the duration is the first paging frame (PF) from the current default paging cycle where UE receives the availability indication. In some designs, duration value can be configured by higher layer as one of {1, 2, 4, 8, 16, 32, 64, 128, 256, 512} default paging cycle(s). In some designs, such an approach may be more robust than switching off the TRS explicitly by PEI or paging PDCCH. In some designs, if configured validity duration is >10.24s, and UE does not support eDRX, it is up to UE implementation whether validity duration length is larger than 10.24s. In some designs, when the validity duration is not configured, the default validity duration is 2 default paging cycles.

In some designs, TRS availability indication transmitted on all PDCCH monitoring occasions of the same PEI-O or PO is same (e.g., this accounts for UE beam switch within the validity duration). In some designs, validity duration for different groups of TRS resources sets correspond to different bits in the availability indication field can be different and are maintained independently. In some designs, UE can receive another L1 based signaling for TRS availability indication before the expiration of validity duration associated with a previous signaling for TRS availability indication. In some designs, bit '1' updates the validity duration for associated TRS resources based on the current signaling, and bit '0' keeps existing validity duration indicated by the last signaling that has bit value 1.

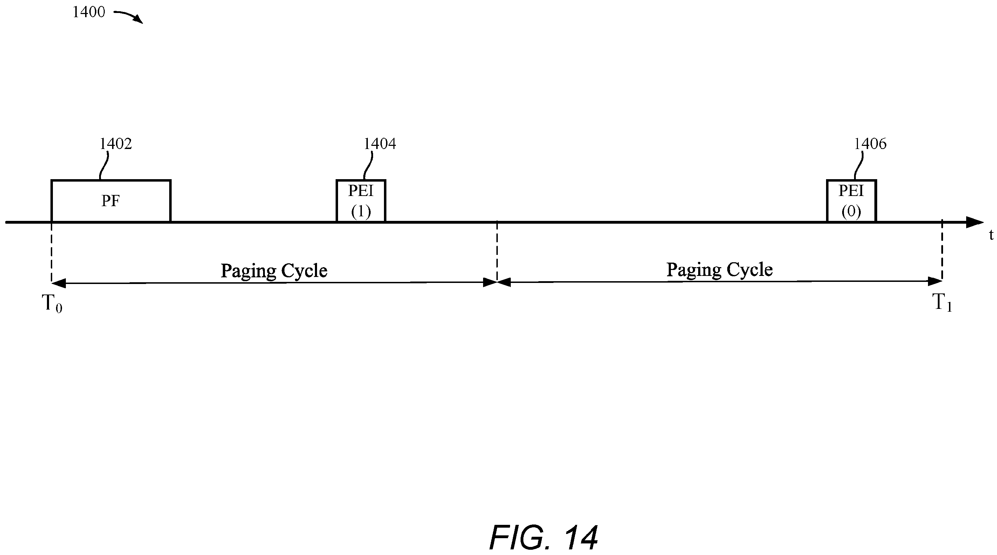

FIG. 14 illustrates a TRS validity period configuration 1400 in accordance with aspects of the disclosure. In FIG. 14, assume that TRS validity duration starts at T₀ at PF 1402. At 1404, a PEI is received with TRS availability indication bit = 1. At 1406, a PEI is received with TRS availability indication bit = 0. The validity duration of the TRS ends at T₁.

Aspects of the disclosure are directed to an SRS-P early indication (SEI). In some designs, the SEI may be configured similarly to the PEI, except that the SEI is used to trigger a sub-group of UEs to transmit SRS-P rather than wakeup and monitor a PO. Such aspects may provide various technical advantages, such as triggering SRS-P transmission with less latency, with more flexibility, and so on.

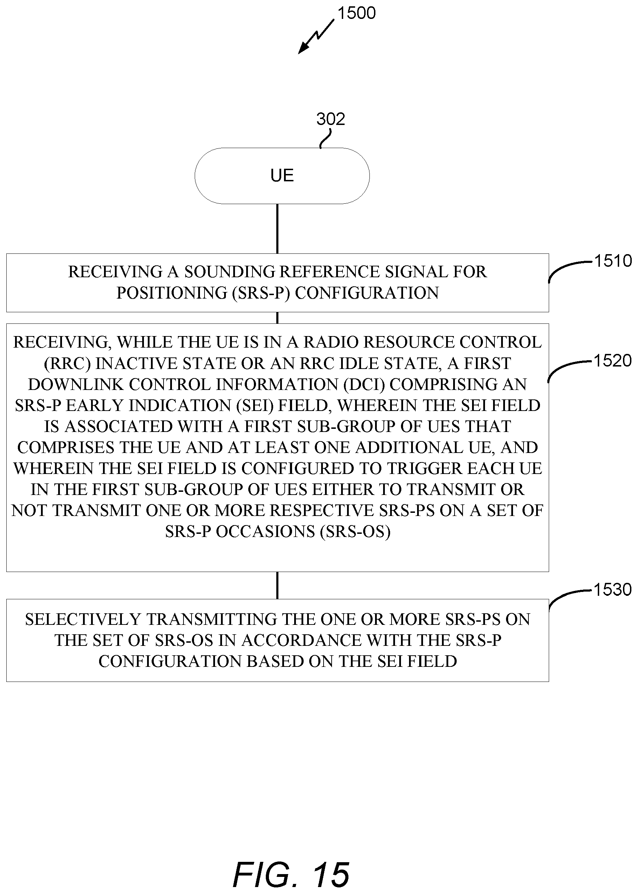

FIG. 15 illustrates an exemplary process 1500 of communications according to an aspect of the disclosure. The process 1500 of FIG. 15 is performed by a UE, such as UE 302.

Referring to FIG. 15, at 1510, UE 302 (e.g., receiver 312 or 322, etc.) receives a sounding reference signal for positioning (SRS-P) configuration. In some designs, the SRS-P configuration may be received via L1 signaling or L2 signaling or L3 signaling. In an aspect, a means for performing the receiving of 1510 may include receiver 312 or 322, etc., of UE 302.

Referring to FIG. 15, at 1520, UE 302 (e.g., receiver 312 or 322, etc.) receives, while the UE is in a radio resource control (RRC) Inactive state or an RRC Idle state, a first downlink control information (DCI) comprising an SRS-P early indication (SEI) field. In some designs, the first DCI may be included as part of a PDCCH. In an aspect, the SEI field is associated with a first sub-group of UEs that comprises the UE and at least one additional UE. In a further aspect, the SEI field is configured to trigger each UE in the first sub-group of UEs either to transmit or not transmit one or more respective SRS-Ps on a set of SRS-P occasions (SRS-Os). In an aspect, a means for performing the receiving of 1520 may include receiver 312 or 322, etc., of UE 302.

Referring to FIG. 15, at 1530, UE 302 (e.g., positioning component 342, processor(s) 332, transmitter 314 or 324, etc.) selectively transmits the one or more SRS-Ps on the set of SRS-Os in accordance with the SRS-P configuration based on the SEI field. For example, the SRS-P(s) may or may not be transmitted at 1530 based on a configuration of the SEI field (e.g., whether a respective bit that maps to the UE's sub-group is set to '1' or '0', similar to PEI). In an aspect, a means for performing the transmitting of 1530 may include positioning component 342, processor(s) 332, transmitter 314 or 324, etc., of UE 302.

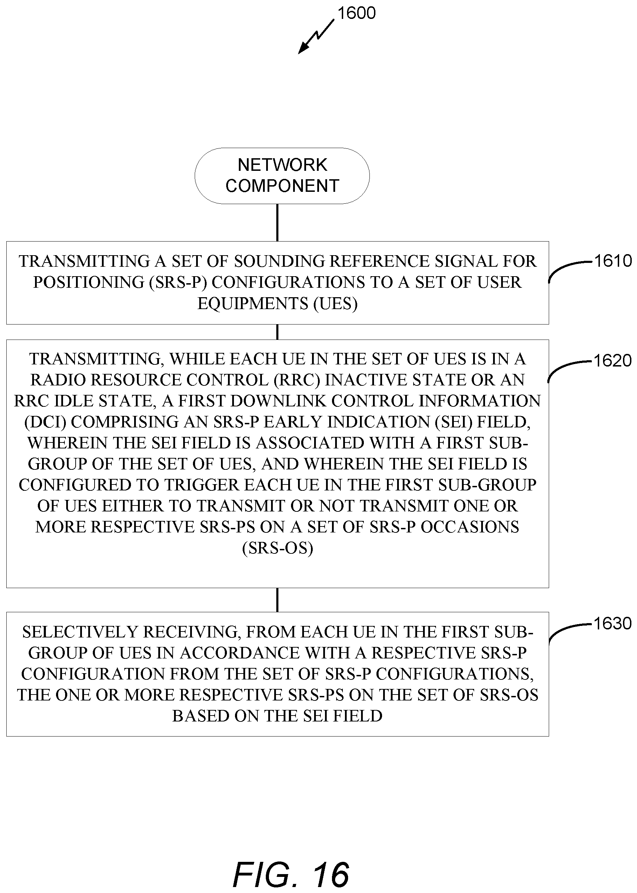

FIG. 16 illustrates an exemplary process 1600 of communications according to an aspect of the disclosure. The process 1600 of FIG. 16 is performed by a network component (e.g., BS 304 or network entity 306, such as LMF, or O-RAN component such as RU/CU/DU, etc.).

Referring to FIG. 16, at 1610, the network component (e.g., transmitter 354 or 364, network transceiver(s) 380 or 390, etc.) transmits a set of sounding reference signal for positioning (SRS-P) configurations to a set of user equipments (UEs). In some designs, the SRS-P configuration(s) may be transmitted via L1 signaling or L2 signaling or L3 signaling. In an aspect, a means for performing the transmission of 1610 may include transmitter 354 or 364, network transceiver(s) 380 or 390, etc., of the network component (e.g., in an example where the network component corresponds to BS 304 or network entity 306).

Referring to FIG. 16, at 1620, the network component (e.g., transmitter 354 or 364, network transceiver(s) 380 or 390, etc.) transmits, while each UE in the set of UEs is in a radio resource control (RRC) Inactive state or an RRC Idle state, a first downlink control information (DCI) comprising an SRS-P early indication (SEI) field. In an aspect, the SEI field is associated with a first sub-group of the set of UEs. In a further aspect, the SEI field is configured to trigger each UE in the first sub-group of UEs either to transmit or not transmit one or more respective SRS-Ps on a set of SRS-P occasions (SRS-Os). In an aspect, a means for performing the transmission of 1620 may include transmitter 354 or 364, network transceiver(s) 380 or 390, etc., of the network component (e.g., in an example where the network component corresponds to BS 304 or network entity 306).

Referring to FIG. 16, at 1630, the network component (e.g., receiver 352 or 362, network transceiver(s) 380 or 390, positioning component 388 or 398, processor(s) 384 or 394, etc.) selectively receives, from each UE in the first sub-group of UEs in accordance with a respective SRS-P configuration from the set of SRS-P configurations, the one or more respective SRS-Ps on the set of SRS-Os based on the SEI field. For example, the SRS-P(s) may or may not be received from particular sub-group(s) of UEs at 1630 based on a configuration of the SEI field (e.g., whether a respective bit that maps to the UE's sub-group is set to '1' or '0', similar to PEI). In an aspect, a means for performing the selective reception of 1630 may include receiver 352 or 362, network transceiver(s) 380 or 390, positioning component 388 or 398, processor(s) 384 or 394, etc., of the network component (e.g., in an example where the network component corresponds to BS 304 or network entity 306).

Referring to FIGS. 15-16, in some designs, the SEI field is configured to trigger each UE in the first sub-group of UEs to transmit the one or more respective SRS-Ps on the set of SRS-Os in accordance with the respective SRS-P configuration. In this case, at 1530 of FIG. 15, the UE transmits the one or more respective SRS-Ps on the set of SRS-Os in accordance with the SRS-P configuration based on the SEI field. Likewise, at 1630 of FIG. 16, the network component receives, from each UE in the first sub-group of UEs in accordance with a respective SRS-P configuration from the set of SRS-P configurations, the one or more respective SRS-Ps on the set of SRS-Os based on the SEI field. In some designs, the SRS-P(s) may be transmitted by RRC_IDLE and RRC_INACTIVE UEs periodically throughout a validity duration associated with the SEI field based on network configuration.

Alternatively, the SEI field is configured to trigger each UE in the first sub-group of UEs not to transmit the one or more respective SRS-Ps on the set of SRS-Os in accordance with the respective SRS-P configuration. In this case, at 1530 of FIG. 15, the UE does not transmit the one or more respective SRS-Ps on the set of SRS-Os in accordance with the SRS-P configuration based on the SEI field. Likewise, at 1630 of FIG. 16, the network component does not receive, from any UE in the first sub-group of UEs in accordance with a respective SRS-P configuration from the set of SRS-P configurations, the one or more respective SRS-Ps on the set of SRS-Os based on the SEI field.

Referring to FIGS. 15-16, in some designs, the first DCI further comprises a paging early indication (PEI) field. In an aspect, the PEI field is associated with a second sub-group of UEs that comprises the UE and one or more additional UEs, and the PEI field is configured to trigger each UE in the second sub-group of UEs either to decode or not decode a paging physical downlink control channel (PDCCH) of a paging occasion (PO). For example, the PEI field may correspond to a first bit of the TRS availability indication bitmap 1304, and the SEI field may correspond to a second bit of the TRS availability indication bitmap 1304. So, the 6 bits may be split between TRS (for paging) and SRS (for positioning). In other designs, the 6 bits of the TRS availability indication bitmap 1304 may be used exclusively for SEI fields/bits (e.g., in this case, the TRS availability indication bitmap 1304 is not used for paging and all UEs may instead monitor the PO). In an aspect, the first DCI comprising the PEI and the SEI is received in a first slot, and the paging PDCCH is received in a second slot that is different than the first slot. In a further aspect, the first sub-group of UEs and the second sub-group of UEs are the same. Alternatively, the first sub-group of UEs and the second sub-group of UEs are different. In some designs, the paging PDCCH is scrambled with Radio Network Temporary Identifier (RNTIs) for broadcast.

Referring to FIGS. 15-16, in terms of signaling, PDCCH-based signaling may be used for the first DCI that includes the SEI field. For example, a new DCI format 2_X may be defined for the SEI-comprising PDCCH. In an aspect, one bit in the DCI payload indicates one UE subgroup or one UE group of a SRS-O depending on whether sub-grouping is configured. In an aspect, the SEI field may carry SI change indication or ETWS/CMAS notification.

Referring to FIGS. 15-16, in some designs, the SEI acts as a wakeup signal, and UE does not transmit SRS-P on the upcoming SRS-O if the SEI field is not detected (i.e., not detected with a bit configuration that triggers the SRS-P transmission). Alternatively, the SEI field acts as a sleep signal, and the UE does not transmit SRS-P on the upcoming SRS-O if SRS-EI is detected (i.e., not detected with a bit configuration that triggers sleep). In an aspect, the first DCI is scrambled with group common (GC) information and the paging PDCCH is scrambled with RNTI(s) for broadcast. In some designs, UE does not expect to process information from more than one DCI with CRC scrambled with [RNTIs for broadcast] or [UE group common information] in the same slot.

Referring to FIGS. 15-16, in some designs, the SEI field comprises an indication of a number of SRS-Os in the set of SRS-Os. For example, the set of SRS-Os comprises SRS-Os in consecutive SRS-P frames that correspond to the indicated number of SRS-Os. For example, the SEI field indicates *SRSOnumPerSEI* SRSO(s) in X consecutive SRS frames (SRS-Fs). An SRS frame may correspond to a Paging Frame, or may be separately configured (e.g., as a multiple of the SRS periodicity). In an aspect, the "X consecutive frames" may also be known as SRS cycle or be equal to the paging cycle (also known as I-DRX).

Referring to FIGS. 15-16, in some designs, the SEI field comprises an indication of one or more designated SRS-Os that comprise the set of SRS-Os. For example, the first DCI may include an SEI bitmap that comprises a plurality of SEI fields. Each SEI field in the plurality of SEI fields is associated with a different one of a plurality of sub-groups of UEs, and each SEI field in the plurality of SEI fields is configured to trigger each UE in a respective sub-group of UEs either to transmit or not transmit at least one respective SRS-P on a respective set of SRS-Os. As noted above, in one example, the SEI bitmap may correspond to some or all of the TRS availability indication bitmap 1304. In some designs, a size of the SEI bitmap is based on a first number of bits associated with a number of SRS-Os in each respective set of SRS-Os multiplied by a number of sub-groups of UEs in the plurality of sub-groups of UEs. For example, assume the SEI bitmap includes *SRSOnumPerSEI* bit segment(s) each of *K* bits, where *K* = subgroupsNumPerSRSO if sub-grouping is configured, otherwise *K =* 1. In an aspect, the ith bit of each segment corresponds to the ith sub-group. In an aspect, the size of the bitmap is *SRSOnumPerSEI* × *subgroupsNumPerSRSO* if sub-grouping is configured, otherwise the size of the bitmap is *SRSOnumPerSEI.*

Referring to FIGS. 15-16, in some designs, a mapping of the UE and the at least one UE additional UE to the first sub-group of UEs is based on UE identifier (ID), or a number of SRS-P frames in an SRS-P cycle, or a number of SRS-Os per SRS-P frame, or an index of a respective SRS-O within a respective SRS-P frame, or any combination thereof.

For example, UE determines index of its associated bit segment based on SRSO index within the SRS cycle. In an aspect, SRSO index is consecutively counted for SRSOs in the SRS cycle. In an aspect, the UE may map the SRSO index to a bit segment based on the relative SRSO index within bitmap by *i_{PO}* = ((UE_ID mod *N*) × *Nₛ + iₛ*)mod SRSOnumPerSRSEI, whereby
- *N:* total number of SRS frames in SRS cycle
- *Nₛ* : SRSO number per SRS frame
- *iₛ* :index of the SRSO within SRS frame

In an aspect, if subgrouping is configured, within the bit segment, the bit that is used as the SRS indication for UE's subgroup is determined by the UE's subgroup index *i_{SG}*, e.g., bit *i_{PO}* × *K + i_{SG}* of the paging indication bitmap. In some designs, a bit value of '1' triggers UE(s) belonging in the indicated sub-group to transmit the SRS-P at the indicated SRS-O, and a bit value of '0' triggers UE(s) belonging in the indicated sub-group not to transmit the SRS-P at the indicated SRS-O.

Referring to FIGS. 15-16, in some designs, the UE receives (and the network component transmits), while the UE is in the RRC Inactive state or the RRC Idle state, a second DCI that comprises an indication of whether the SRS-P configuration remains valid or whether the SEI field of the first DCI remains valid or both. This aspect is similar to the TRS availability indication bit described with respect to 1404 and 1406 of FIG. 14. In an aspect, the second DCI corresponds to the first DCI, or the second DCI corresponds to another DCI that is different than the first DCI and that comprises another SEI field, or the second DCI corresponds to a paging DCI message, or the second DCI corresponds to a paging early indication (PEI) DCI, or a combination thereof. For example, the SRS-P configuration validation indication may be used to ensure SRS-P continuity in cases of cell change while the UE remains in RRC_IDLE or RRC_INACTIVE (e.g., without significant increase to power consumption and without high latency).

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an ASIC, a field-programable gate array (FPGA), or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, for example, a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

## Claims

1. A method of operating a user equipment, UE (302), comprising:
receiving (1510) a sounding reference signal for positioning, SRS-P, configuration;
receiving (1520), while the UE is in a radio resource control, RRC, Inactive state or an RRC Idle state, a first downlink control information, DCI, comprising an SRS-P early indication, SEI, field,
wherein the SEI field is associated with a first sub-group of UEs that comprises the UE and at least one additional UE, and
wherein the SEI field is configured to trigger each UE in the first sub-group of UEs either to transmit or not transmit one or more respective SRS-Ps on a set of SRS-P occasions, SRS-Os; and
selectively transmitting (1530) the one or more SRS-Ps on the set of SRS-Os in accordance with the SRS-P configuration based on the SEI field; **characterised by**
receiving, while the UE is in the RRC Inactive state or the RRC Idle state, a second DCI that comprises an indication of whether the SRS-P configuration remains valid or whether the SEI field of the first DCI remains valid or both.

2. The method of claim 1,
wherein the SEI field is configured to trigger each UE (302) in the first sub-group of UEs to transmit the one or more respective SRS-Ps on the set of SRS-Os in accordance with the respective SRS-P configuration, and
wherein the selectively transmitting comprises transmitting the one or more respective SRS-Ps on the set of SRS-Os in accordance with the SRS-P configuration based on the SEI field.

3. The method of claim 1,
wherein the SEI field is configured to trigger each UE (302) in the first sub-group of UEs not to transmit the one or more respective SRS-Ps on the set of SRS-Os in accordance with the respective SRS-P configuration, and
wherein the selectively transmitting comprises not transmitting the one or more respective SRS-Ps on the set of SRS-Os in accordance with the respective SRS-P configuration.

4. The method of claim 1, wherein the first DCI is scrambled with group common, GC, information.

5. The method of claim 1,
wherein the first DCI further comprises a paging early indication, PEI, field,
wherein the PEI field is associated with a second sub-group of UEs that comprises the UE and one or more additional UEs, and
wherein the PEI field is configured to trigger each UE in the second sub-group of UEs either to decode or not decode a paging physical downlink control channel, PDCCH, of a paging occasion, PO.

6. The method of claim 5,
wherein the first DCI comprising the PEI and the SEI is received in a first slot, and
wherein the paging PDCCH is received in a second slot that is different than the first slot.

7. The method of claim 5, wherein the first sub-group of UEs and the second sub-group of UEs are the same, or the first sub-group of UEs and the second sub-group of UEs are different.

8. The method of claim 5, wherein the paging PDCCH is scrambled with Radio Network Temporary Identifier, RNTIs, for broadcast.

9. The method of claim 1, wherein the SEI field comprises an indication of a number of SRS-Os in the set of SRS-Os, preferably wherein the set of SRS-Os comprises SRS-Os in consecutive SRS-P frames that correspond to the indicated number of SRS-Os.

10. The method of claim 1, wherein the SEI field comprises an indication of one or more designated SRS-Os that comprise the set of SRS-Os; and
preferably wherein:
the first DCI comprises an SEI bitmap that comprises a plurality of SEI fields,
each SEI field in the plurality of SEI fields is associated with a different one of a plurality of sub-groups of UEs, and
each SEI field in the plurality of SEI fields is configured to trigger each UE in a respective sub-group of UEs either to transmit or not transmit at least one respective SRS-P on a respective set of SRS-Os; and
preferably wherein a size of the SEI bitmap is based on a first number of bits associated with a number of SRS-Os in each respective set of SRS-Os multiplied by a number of sub-groups of UEs in the plurality of sub-groups of UEs.

11. The method of claim 1,
wherein a mapping of the UE and the at least one additional UE to the first sub-group of UEs is based on:
UE identifier, ID, or
a number of SRS-P frames in an SRS-P cycle, or
a number of SRS-Os per SRS-P frame, or
an index of a respective SRS-O within a respective SRS-P frame, or
any combination thereof.

12. The method of claim 1,
wherein the second DCI corresponds to the first DCI, or
wherein the second DCI corresponds to another DCI that is different than the first DCI and that comprises another SEI field, or
wherein the second DCI corresponds to a paging DCI message, or
wherein the second DCI corresponds to a paging early indication, PEI, DCI, or
a combination thereof.

13. A method of operating a network component, comprising:
transmitting (1610) a set of sounding reference signal for positioning, SRS-P, configurations to a set of user equipments, UEs;
transmitting (1620), while each UE in the set of UEs is in a radio resource control, RRC, Inactive state or an RRC Idle state, a first downlink control information, DCI, comprising an SRS-P early indication, SEI, field,
wherein the SEI field is associated with a first sub-group of the set of UEs, and
wherein the SEI field is configured to trigger each UE in the first sub-group of UEs either to transmit or not transmit one or more respective SRS-Ps on a set of SRS-P occasions, SRS-Os; and
selectively receiving (1630), from each UE in the first sub-group of UEs in accordance with a respective SRS-P configuration from the set of SRS-P configurations, the one or more respective SRS-Ps on the set of SRS-Os based on the SEI field; and
**characterised by**
transmitting, while each UE in the first sub-group of UEs is in the RRC Inactive state or the RRC Idle state, a second DCI that comprises an indication of whether the respective SRS-P configuration remains valid or whether the SEI field of the first DCI remains valid or both.

14. A user equipment, UE (302), comprising:
a memory;
at least one transceiver; and
at least one processor communicatively coupled to the memory and the at least one transceiver, the at least one processor configured to:
receive (1510), via the at least one transceiver, a sounding reference signal for positioning, SRS-P, configuration;
receive (1520), via the at least one transceiver, while the UE is in a radio resource control, RRC, Inactive state or an RRC Idle state, a first downlink control information, DCI, comprising an SRS-P early indication, SEI, field,
wherein the SEI field is associated with a first sub-group of UEs that comprises the UE and at least one additional UE, and
wherein the SEI field is configured to trigger each UE in the first sub-group of UEs either to transmit or not transmit one or more respective SRS-Ps on a set of SRS-P occasions, SRS-Os; and
selectively transmit (1530), via the at least one transceiver, the one or more SRS-Ps on the set of SRS-Os in accordance with the SRS-P configuration based on the SEI field; and
**characterised in that** the UE receives, via the at least one transceiver, while the UE is in the RRC Inactive state or the RRC Idle state, a second DCI that comprises an indication of whether the SRS-P configuration remains valid or whether the SEI field of the first DCI remains valid or both.

15. A network component, comprising:
a memory;
at least one transceiver; and
at least one processor communicatively coupled to the memory and the at least one transceiver, the at least one processor configured to:
transmit (1610), via the at least one transceiver, a set of sounding reference signal for positioning, SRS-P, configurations to a set of user equipments, UEs;
transmit (1620), via the at least one transceiver, while each UE in the set of UEs is in a radio resource control, RRC, Inactive state or an RRC Idle state, a first downlink control information, DCI, comprising an SRS-P early indication, SEI, field,
wherein the SEI field is associated with a first sub-group of the set of UEs, and
wherein the SEI field is configured to trigger each UE in the first sub-group of UEs either to transmit or not transmit one or more respective SRS-Ps on a set of SRS-P occasions, SRS-Os; and
selectively receive (1630), via the at least one transceiver, from each UE in the first sub-group of UEs in accordance with a respective SRS-P configuration from the set of SRS-P configurations, the one or more respective SRS-Ps on the set of SRS-Os based on the SEI field; and
**characterised in that** the network component transmits, via the at least one transceiver, while each UE in the first sub-group of UEs is in the RRC Inactive state or the RRC Idle state, a second DCI that comprises an indication of whether the respective SRS-P configuration remains valid or whether the SEI field of the first DCI remains valid or both.

## Patentansprüche

1. Verfahren zum Betreiben eines UE (User Equipment) (302), das Folgendes beinhaltet:
Empfangen (1510) einer SRS-P-(Sounding Reference Signal for Positioning)-Konfiguration;
Empfangen (1520), während das UE in einem RRC-(Radio Resource Control)-Inaktivzustand oder in einem RRC-Ruhezustand ist, einer ersten DCI (Downlink Control Information), die ein SEI-(SRS-P Early Indication)-Feld umfasst,
wobei das SEI-Feld mit einer ersten Untergruppe von UEs assoziiert ist, die das UE und mindestens ein weiteres UE umfasst, und
wobei das SEI-Feld zum Veranlassen jedes UE in der ersten Untergruppe von UEs zum Senden oder Nichtsenden eines oder mehrerer jeweiliger SRS-Ps zu einem Satz von SRS-0s (SRS-P Occasions) konfiguriert ist; und
selektives Senden (1530) der ein oder mehreren SRS-Ps zu dem Satz von SRS-0s gemäß der SRS-P-Konfiguration auf der Basis des SEI-Feldes; **gekennzeichnet durch**
Empfangen, während das UE im RRC-Inaktiv-Zustand oder im RRC-Ruhezustand ist, einer zweiten DCI, die eine Angabe darüber enthält, ob die SRS-P-Konfiguration gültig bleibt oder ob das SEI-Feld der ersten DCI gültig bleibt oder beides.

2. Verfahren nach Anspruch 1,
wobei das SEI-Feld zum Veranlassen jedes UE (302) in der ersten Untergruppe von UEs zum Senden der ein oder mehreren jeweiligen SRS-Ps zu dem Satz von SRS-0s gemäß der jeweiligen SRS-P-Konfiguration konfiguriert ist, und
wobei das selektive Senden das Senden der ein oder mehreren jeweiligen SRS-Ps zu dem Satz von SRS-0s gemäß der auf dem SEI-Feld basierenden SRS-P-Konfiguration umfasst.

3. Verfahren nach Anspruch 1,
wobei das SEI-Feld zum Veranlassen jedes UE (302) in der ersten Untergruppe von UEs zum Nichtsenden der ein oder mehreren jeweiligen SRS-Ps zu dem Satz von SRS-0s gemäß der jeweiligen SRS-P-Konfiguration konfiguriert ist, und
wobei das selektive Senden das Nichtsenden der ein oder mehreren jeweiligen SRS-Ps zu dem Satz von SRS-0s gemäß der jeweiligen SRS-P-Konfiguration beinhaltet.

4. Verfahren nach Anspruch 1, wobei die erste DCI mit GC-(Group Common)-Informationen verschlüsselt wird.

5. Verfahren nach Anspruch 1,
wobei die erste DCI ferner ein PEI-(Paging Early Indication)-Feld umfasst,
wobei das PEI-Feld mit einer zweiten Untergruppe von UEs assoziiert ist, die das UE und ein oder mehrere weitere UEs umfasst, und
wobei das PEI-Feld zum Veranlassen jedes UE in der zweiten Untergruppe von UEs zum Decodieren oder Nichtdecodieren eines Paging-PDCCH (Physical Downlink Control Channel) einer PO (Paging Occasion) konfiguriert ist.

6. Verfahren nach Anspruch 5,
wobei die die PEI und die SEI umfassende erste DCI in einem ersten Slot empfangen wird und
wobei der Paging-PDCCH in einem zweiten Slot empfangen wird, der sich vom ersten Slot unterscheidet.

7. Verfahren nach Anspruch 5, wobei die erste Untergruppe von UEs und die zweite Untergruppe von UEs gleich sind oder die erste Untergruppe von UEs und die zweite Untergruppe von UEs unterschiedlich sind.

8. Verfahren nach Anspruch 5, wobei der Paging-PDCCH für Broadcast mit RNTIs (Radio Network Temporary Identifier) verschlüsselt wird.

9. Verfahren nach Anspruch 1, wobei das SEI-Feld eine Angabe einer Anzahl von SRS-0s in dem Satz von SRS-0s umfasst, wobei vorzugsweise der Satz von SRS-0s SRS-0s in aufeinanderfolgenden SRS-P-Frames umfasst, die der angegebenen Anzahl von SRS-0s entsprechen.

10. Verfahren nach Anspruch 1, wobei das SEI-Feld eine Angabe eines oder mehrerer designierter SRS-0s umfasst, die den Satz von SRS-0s umfassen; und
wobei vorzugsweise:
die erste DCI eine SEI-Bitmap umfasst, die mehrere SEI-Felder umfasst,
jedes der mehreren SEI-Felder mit einer anderen von mehreren Untergruppen von UEs assoziiert ist und
jedes der mehreren SEI-Felder zum Veranlassen jedes UE in einer jeweiligen Untergruppe von UEs zum Senden oder Nichtsenden mindestens eines jeweiligen SRS-P zu einem jeweiligen Satz von SRS-0s konfiguriert ist; und
wobei vorzugsweise eine Größe der SEI-Bitmap auf einer ersten Anzahl von Bits basiert, die mit einer Anzahl von SRS-0s in jedem jeweiligen Satz von SRS-0s assoziiert ist, multipliziert mit einer Anzahl von Untergruppen von UEs aus der Mehrzahl von Untergruppen von UEs.

11. Verfahren nach Anspruch 1,
wobei eine Zuordnung des UE und des mindestens einen weiteren UE zur ersten Untergruppe von UEs basiert auf:
UE-Kennung, ID, oder
einer Anzahl von SRS-P-Frames in einem SRS-P-Zyklus, oder
einer Anzahl von SRS-0s pro SRS-P-Frame, oder
einem Index einer jeweiligen SRS-0 innerhalb eines jeweiligen SRS-P-Frame, oder
einer beliebigen Kombination davon.

12. Verfahren nach Anspruch 1,
wobei die zweite DCI der ersten DCI entspricht, oder
wobei die zweite DCI einer anderen DCI entspricht, die sich von der ersten DCI unterscheidet und ein anderes SEI-Feld umfasst, oder
wobei die zweite DCI einer Paging-DCI-Nachricht entspricht, oder
wobei die zweite DCI einer PEI-(Paging Early Indication)-DCI entspricht, oder
einer Kombination davon.

13. Verfahren zum Betreiben einer Netzwerkkomponente, das Folgendes beinhaltet:
Senden (1610) eines Satzes von SRS-P-(Sounding Reference Signal for Positioning)-Konfigurationen zu einem Satz von UEs (User Equipments);
Senden (1620), während jedes UE in dem Satz von UEs in einem RRC-(Radio Resource Control)-Inaktivzustand oder in einem RRC-Ruhezustand ist, einer ersten DCI (Downlink Control Information), die ein SEI-(SRS-P Early Indication)-Feld umfasst,
wobei das SEI-Feld mit einer ersten Untergruppe von UEs assoziiert ist, und
wobei das SEI-Feld zum Veranlassen jedes UE in der ersten Untergruppe von UEs zum Senden oder Nichtsenden eines oder mehrerer jeweiliger SRS-Ps zu einem Satz von SRS-0s (SRS-P Occasions) konfiguriert ist; und
selektives Empfangen (1630), von jedem UE in der ersten Untergruppe von UEs gemäß einer jeweiligen SRS-P-Konfiguration aus dem Satz von SRS-P-Konfigurationen, der ein oder mehreren SRS-Ps zu dem Satz von SRS-0s auf der Basis des SEI-Feldes; und **gekennzeichnet durch**
Senden, während jedes UE in der ersten Untergruppe von UEs im RRC-Inaktiv-Zustand oder im RRC-Ruhezustand ist, einer zweiten DCI, die eine Angabe darüber enthält, ob die SRS-P-Konfiguration gültig bleibt oder ob das SEI-Feld der ersten DCI gültig bleibt oder beides.

14. UE (User Equipment) (302), das Folgendes umfasst:
einen Speicher;
mindestens einen Transceiver; und
mindestens einen Prozessor, der mit dem Speicher und dem mindestens einen Transceiver kommunikativ gekoppelt ist, wobei der mindestens eine Prozessor konfiguriert ist zum:
Empfangen (1510), über den mindestens einen Transceiver, einer SRS-P-(Sounding Reference Signal for Positioning)-Konfiguration;
Empfangen (1520), über den mindestens einen Transceiver, während das UE in einem RRC-(Radio Resource Control)-Inaktivzustand oder in einem RRC-Ruhezustand ist, einer ersten DCI (Downlink Control Information), die ein SEI-(SRS-P Early Indication)-Feld umfasst,
wobei das SEI-Feld mit einer ersten Untergruppe von UEs assoziiert ist, die das UE und mindestens ein weiteres UE umfasst, und
wobei das SEI-Feld zum Veranlassen jedes UE in der ersten Untergruppe von UEs zum Senden oder Nichtsenden eines oder mehrerer jeweiliger SRS-Ps zu einem Satz von SRS-0s (SRS-P Occasions) konfiguriert ist; und
selektives Senden (1530), über den mindestens einen Transceiver, der ein oder mehreren SRS-Ps zu dem Satz von SRS-0s gemäß der SRS-P-Konfiguration auf der Basis des SEI-Feldes; und
**dadurch gekennzeichnet, dass** das UE, über den mindestens einen Transceiver, während das UE im RRC-Inaktiv-Zustand oder im RRC-Ruhezustand ist, eine zweite DCI empfängt, die eine Angabe darüber enthält, ob die SRS-P-Konfiguration gültig bleibt oder ob das SEI-Feld der ersten DCI gültig bleibt oder beides.

15. Netzwerkkomponente, die Folgendes umfasst:
einen Speicher;
mindestens einen Transceiver; und
mindestens einen Prozessor, der mit dem Speicher und dem mindestens einen Transceiver kommunikativ gekoppelt ist, wobei der mindestens eine Prozessor konfiguriert ist zum:
Senden (1610), über den mindestens einen Transceiver, eines Satzes von SRS-P-(Sounding Reference Signal for Positioning)-Konfigurationen zu einem Satz von UEs (User Equipments);
Senden (1620), über den mindestens einen Transceiver, während jedes UE in dem Satz von UEs in einem RRC-(Radio Resource Control)-Inaktivzustand oder in einem RRC-Ruhezustand ist, einer ersten DCI (Downlink Control Information), die ein SEI-(SRS-P Early Indication)-Feld umfasst,
wobei das SEI-Feld mit einer ersten Untergruppe von UEs assoziiert ist, und
wobei das SEI-Feld zum Veranlassen jedes UE in der ersten Untergruppe von UEs zum Senden oder Nichtsenden eines oder mehrerer jeweiliger SRS-Ps zu einem Satz von SRS-0s (SRS-P Occasions) konfiguriert ist; und
selektives Empfangen (1630), über den mindestens einen Transceiver, von jedem UE in der ersten Untergruppe von UEs gemäß einer jeweiligen SRS-P-Konfiguration aus dem Satz von SRS-P-Konfigurationen, der ein oder mehreren SRS-Ps zu dem Satz von SRS-0s auf der Basis des SEI-Feldes; und
**dadurch gekennzeichnet, dass** die Netzwerkkomponente, über den mindestens einen Transceiver, während jedes UE in der ersten Untergruppe von UEs im RRC-Inaktiv-Zustand oder im RRC-Ruhezustand ist, eine zweite DCI sendet, die eine Angabe darüber enthält, ob die jeweilige SRS-P-Konfiguration gültig bleibt oder ob das SEI-Feld der ersten DCI gültig bleibt oder beides.

## Revendications

1. Procédé d'exploitation d'un équipement utilisateur, UE (302), comprenant :
la réception (1510) d'une configuration de signal de référence de sondage pour positionnement, SRS-P ;
la réception (1520), tandis que l'UE est dans un état de commande de ressources radio, RRC, inactif ou un état RRC au repos, de premières informations de commande de liaison descendante, DCI, comprenant un champ d'indication précoce de SRS-P, SEI,
dans lequel le champ SEI est associé à un premier sous-groupe d'UE qui comprend l'UE et au moins un UE supplémentaire, et
dans lequel le champ SEI est configuré pour déclencher chaque UE dans le premier sous-groupe d'UE pour soit transmettre, soit ne pas transmettre un ou plusieurs SRS-P respectifs sur un ensemble d'occasions de SRS-P, SRS-O ; et
la transmission sélective (1530) des un ou plusieurs SRS-P sur l'ensemble de SRS-O conformément à la configuration SRS-P sur la base du champ SEI ; et **caractérisé par**
la réception, tandis que l'UE est dans l'état RRC inactif ou l'état RRC au repos, de secondes DCI qui comprennent une indication que la configuration SRS-P reste valide ou non ou que le champ SEI des premières DCI reste valide ou non, ou les deux.

2. Procédé selon la revendication 1,
dans lequel le champ SEI est configuré pour déclencher chaque UE (302) dans le premier sous-groupe d'UE afin de transmettre un ou plusieurs SRS-P respectifs sur l'ensemble de SRS- O conformément à la configuration de SRS-P respective, et
dans lequel la transmission sélective comprend la transmission de l'ensemble des un ou plusieurs SRS-P respectifs sur l'ensemble de SRS-O conformément à la configuration de SRS-P sur la base du champ SEI.

3. Procédé selon la revendication l ,
dans lequel le champ SEI est configuré pour déclencher chaque UE (302) dans le premier sous-groupe d'UE afin de ne pas transmettre les un ou plusieurs SRS-P respectifs sur l'ensemble de SRS-O conformément à la configuration de SRS-P respective, et
dans lequel la transmission sélective comprend la non-transmission des un ou plusieurs SRS-P respectifs sur l'ensemble de SRS-O conformément à la configuration de SRS-P respective.

4. Procédé selon la revendication 1, dans lequel les premières DCI sont brouillées avec des informations communes de groupe, GC.

5. Procédé selon la revendication 1,
dans lequel les premières DCI comprennent en outre un champ d'indication précoce de radiomessagerie, PEI,
dans lequel le champ PEI est associé à un second sous-groupe d'UE qui comprend l'UE et un ou plusieurs UE supplémentaires, et
dans lequel le champ PEI est configuré pour déclencher chaque UE dans le second sous-groupe d'UE soit pour décoder, soit pour ne pas décoder un canal physique de commande de liaison descendante, PDCCH, de radiomessagerie d'une occasion de radiomessagerie, PO.

6. Procédé selon la revendication 5,
dans lequel les premières DCI comprennent le PEI et le SEI est reçu dans une première tranche de temps, et
dans lequel le PDCCH de radiomessagerie est reçu dans une seconde tranche de temps différente de la première tranche de temps.

7. Procédé selon la revendication 5, dans lequel le premier sous-groupe d'UE et le second sous-groupe d'UE sont identiques, ou le premier sous-groupe d'UE et le second sous-groupe d'UE sont différents.

8. Procédé selon la revendication 5, dans lequel le PDCCH de radiomessagerie est brouillé avec un identifiant temporaire de réseau radio, RNTI, pour sa diffusion.

9. Procédé selon la revendication 1, dans lequel le champ SEI comprend une indication d'un nombre de SRS-O dans l'ensemble de SRS-O, de préférence dans lequel l'ensemble de SRS-O comprend des SRS-O dans des trames SRS-P consécutives qui correspondent au nombre indiqué de SRS-O.

10. Procédé selon la revendication 1, dans lequel le champ SEI comprend une indication d'une ou plusieurs SRS-O désignées qui comprennent l'ensemble de SRS-O ; et
de préférence dans lequel :
les premières DCI comprennent un matriciel SEI qui comprend une pluralité de champs SEI,
chaque champ SEI dans la pluralité de champs SEI est associé à un sous-groupe différent d'une pluralité de sous-groupes d'UE, et
chaque champ SEI dans la pluralité de champs SEI est configuré pour déclencher chaque UE dans un sous-groupe respectif d'UE pour soit transmettre, soit ne pas transmettre au moins un SRS-P respectif sur un ensemble respectif de SRS-O ; et
de préférence dans lequel une taille du matriciel de SEI est basée sur un premier nombre de bits associé à un nombre de SRS-O dans chaque ensemble respectif de SRS-O multiplié par un nombre de sous-groupes d'UE dans la pluralité de sous-groupes d'UE.

11. Procédé selon la revendication 1,
dans lequel un mappage de l'UE et de l'au moins un UE supplémentaire sur le premier sous-groupe d'UE est basé sur :
un identifiant, ID, d'UE, ou
un nombre de trames de SRS-P dans un cycle de SRS-P, ou
un nombre de SRS-O par trame de SRS-P, ou
un indice d'une SRS-O respective dans une trame de SRS-P respective, ou
n'importe quelle combinaison de ce qui précède.

12. Procédé selon la revendication 1,
dans lequel les secondes DCI correspondent aux premières DCI, ou
dans lequel les secondes DCI correspondent à d'autres DCI différentes des premières DCI et comprennent un autre champ SEI, ou
dans lequel les secondes DCI correspondent à un message de DCI de radiomessagerie, ou
dans lequel les secondes DCI correspondent à une indication anticipée de radiomessagerie, PEI, DCI, ou
une combinaison de ce qui précède.

13. Procédé d'exploitation d'un composant de réseau, comprenant :
la transmission (1610) d'un ensemble de configurations de signal de référence de sondage pour positionnement, SRS-P, à un ensemble d'équipements utilisateurs, UE ;
la réception (1620), tandis que chaque UE dans l'ensemble d'UE est dans un état de commande de ressources radio, RRC, inactif ou un état RRC au repos, de premières informations de commande de liaison descendante, DCI, comprenant un champ d'indication précoce de SRS-P, SEI,
dans lequel le champ SEI est associé à un premier sous-groupe de l'ensemble d'UE, et
dans lequel le champ SEI est configuré pour déclencher chaque UE dans le premier sous-groupe d'UE pour soit transmettre, soit ne pas transmettre un ou plusieurs SRS-P respectifs sur un ensemble d'occasions de SRS-P, SRS-O ; et
la réception sélective (1630) , à partir de chaque UE dans le premier sous-groupe d'UE conformément à une configuration de SRS-P respective de l'ensemble de configurations de SRS-P, des un ou plusieurs SRS-P respectifs sur l'ensemble de SRS-O sur la base du champ SEI ; et **caractérisé par**
la transmission, tandis que chaque UE dans le premier sous-groupe d'UE est dans l'état RRC inactif ou l'état RRC au repos, de secondes DCI qui comprennent une indication que la configuration SRS-P reste valide ou non ou que le champ SEI des premières DCI reste valide ou non, ou les deux.

14. Équipement utilisateur, UE (3 02), comprenant :
une mémoire ;
au moins un émetteur-récepteur ; et
au moins un processeur couplé en communication à la mémoire et à l'au moins un émetteur-récepteur, l'au moins un processeur étant configuré pour :
recevoir (1510), par l'intermédiaire de l'au moins un émetteur-récepteur, une configuration de signal de référence de sondage pour positionnement, SRS-P ;
recevoir (1520), par l'intermédiaire de l'au moins un émetteur-récepteur, tandis que l'UE est dans un état de commande de ressources radio, RRC, inactif ou un état RRC au repos, des premières informations de commande de liaison descendante, DCI, comprenant un champ d'indication précoce de SRS-P, SEI,
dans lequel le champ SEI est associé à un premier sous-groupe d'UE qui comprend l'UE et au moins un UE supplémentaire, et
dans lequel le champ SEI est configuré pour déclencher chaque UE du premier sous-groupe d'UE pour soit transmettre, soit ne pas transmettre un ou plusieurs SRS-P respectifs sur un ensemble d'occasions SRS-P, SRS-O ; et
transmettre sélectivement (1530), par l'intermédiaire de l'au moins un émetteur-récepteur, les un ou plusieurs SRS-P sur l'ensemble de SRS-O conformément à la configuration SRS-P sur la base du champ SEI ; et
**caractérisé en ce que** l'UE reçoit, par l'intermédiaire de l'au moins un émetteur-récepteur, tandis que l'UE est dans l'état RRC inactif ou l'état RRC au repos, de secondes DCI qui comprennent une indication que la configuration SRS-P reste valide ou non ou que le champ SEI des premières DCI reste valide ou non, ou les deux.

15. Composant de réseau, comprenant :
une mémoire ;
au moins un émetteur-récepteur ; et
au moins un processeur couplé en communication à la mémoire et à l'au moins un émetteur-récepteur, l'au moins un processeur étant configuré pour :
transmettre (1610), par l'intermédiaire de l'au moins un émetteur-récepteur, un ensemble de configurations de signal de référence de sondage pour positionnement, SRS-P, à un ensemble d'équipements utilisateurs, UE ;
transmettre (1620), par l'intermédiaire de l'au moins un émetteur-récepteur, tandis que chaque UE dans l'ensemble des UE est dans un état de commande de ressources radio, RRC, inactif ou un état RRC au repos, des premières informations de commande de liaison descendante, DCI, comprenant un champ d'indication précoce de SRS-P, SEI,
dans lequel le champ SEI est associé à un premier sous-groupe de l'ensemble d'UE, et
dans lequel le champ SEI est configuré pour déclencher chaque UE dans le premier sous-groupe d'UE pour soit transmettre, soit ne pas transmettre un ou plusieurs SRS-P respectifs sur un ensemble d'occasions de SRS-P, SRS-O ; et
recevoir sélectivement (1630), par l'intermédiaire de l'au moins un émetteur-récepteur, à partir de chaque UE dans le premier sous-groupe d'UE, conformément à une configuration SRS-P respective de l'ensemble de configurations SRS-P, les un ou plusieurs SRS-P respectifs sur l'ensemble de SRS-O sur la base du champ SEI ; et
**caractérisé en ce que** le composant de réseau transmet, par l'intermédiaire de l'au moins un émetteur-récepteur, tandis que chaque UE dans le premier sous-groupe d'UE est dans l'état RRC inactif ou l'état RRC au repos, des secondes DCI qui comprennent une indication que la configuration SRS-P respective reste valide ou non ou que le champ SEI des premières DCI reste valide ou non, ou les deux.
